# EUROPEAN PATENT APPLICATION

(11) **EP 4 838 956 A1**
(43) Date of publication of application: **11.11.2026**
(21) Application number: 25747657.2
(22) Date of filing: 21.01.2025
(51) Int. Cl.: H04W 36/30, H04W 36/14

(54) **COMMUNICATION METHOD, APPARATUS AND SYSTEM**

(30) Priority: 31.01.2024 CN 202410153049
(71) Applicant: Huawei Technologies Co., Ltd., Shenzhen, Guangdong 518129 (CN)
(72) Inventor: YOU, Chunhua, Shenzhen, Guangdong 518129 (CN); ZHANG, Hongzhuo, Shenzhen, Guangdong 518129 (CN)
(74) Representative: Goddar, Heinz J.
(86) International application number: PCT/CN2025/073711
(87) International publication number: WO 2025/162085

(57) **Abstract**

This application relates to the field of communication technologies, and discloses a communication method, an apparatus, and a system. The method includes: A terminal side apparatus receives a first message from a first network side apparatus, where the first message is used to configure M handover conditions; receives a second message from the first network side apparatus, where the second message indicates to evaluate a handover condition of a first cell, and the M handover conditions include the handover condition of the first cell; and evaluates the handover condition of the first cell in response to the second message. According to the foregoing method, the first network side apparatus may send the second message to the terminal side apparatus in advance when signal quality of a source cell is good. After receiving the second message, the terminal side apparatus does not perform handover immediately, but evaluates the handover condition of the first cell, to avoid a problem that handover is affected because a switch command message fails to be sent due to a rapid change of the signal quality of the source cell, thereby improving handover robustness.

## Description

### CROSS-REFERENCE TO RELATED APPLICATIONS

This application claims priority to Chinese Patent Application No. 202410153049.4, filed with the China National Intellectual Property Administration on January 31, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

Cell handover is a crucial characteristic in communication systems. Before signal quality of a serving cell deteriorates, a network device switches a terminal to a neighboring cell with good signal quality, to provide lossless or packet-loss-free communication services.

In existing cell handover, the network device sends a switch command to the terminal, so that the terminal switches from a source cell to a target cell based on the switch command. However, a rapid change of signal quality of the source cell, for example, sudden deterioration of the signal quality of the source cell, may lead to a failure of sending of the switch command, resulting in poor handover robustness.

### SUMMARY

This application provides a communication method, an apparatus, and a system, to improve handover robustness.

**According to a first aspect**, an embodiment of this application provides a communication method. The method may be applied to a terminal side apparatus, and the terminal side apparatus may be a terminal or a component (for example, a chip or a circuit) in the terminal. For example, in the method, the terminal side apparatus receives a first message from a first network side apparatus, where the first message is used to configure M handover conditions; receives a second message from the first network side apparatus, where the second message indicates to evaluate a handover condition of a first cell; the M handover conditions include the handover condition of the first cell, and M is an integer greater than or equal to 1; and evaluates the handover condition of the first cell in response to the second message.

According to the foregoing method, the first network side apparatus may send the second message to the terminal side apparatus in advance when signal quality of a source cell is good. After receiving the second message, the terminal side apparatus does not perform handover immediately, but evaluates the handover condition of the first cell, to avoid a problem that handover is affected because a switch command message fails to be sent due to a rapid change of the signal quality of the source cell, thereby improving handover robustness.

In a possible design, the second message includes identifier information corresponding to the first cell, and/or identifier information of the handover condition of the first cell.

In this way, the second message may indicate, by using the identifier information corresponding to the first cell, a handover condition of a specific cell to be evaluated; and/or the second message may indicate, by using the identifier information of the handover condition of the first cell, a specific handover condition of the first cell to be evaluated.

In a possible design, the M handover conditions correspond to N cells, the N cells include the first cell, N is less than or equal to M, and N is an integer greater than or equal to 1.

In a possible design, the first message further indicates not to evaluate the handover condition of the first cell.

The first message may explicitly indicate not to evaluate the handover condition of the first cell (for example, the first message includes inactive information); or the first message may implicitly indicate not to evaluate the handover condition of the first cell.

In a possible design, the second message includes first indication information, and the first indication information indicates conditional handover; and the second message further includes second indication information, and the second indication information indicates to evaluate the handover condition of the first cell in a case of the conditional handover.

In a possible design, the method further includes: switching to the first cell in response to evaluation of the handover condition of the first cell.

In a possible design, switching to the first cell in response to the evaluation of the handover condition of the first cell includes: when an evaluation result is determined as that the handover condition of the first cell is met, switching to the first cell.

In a possible design, the handover condition of the first cell includes K handover conditions, where K is an integer greater than or equal to 1; and that the handover condition of the first cell is met includes: one of the K handover conditions of the first cell is met.

For example, if the second message indicates to evaluate a handover condition 1 in the K handover conditions, the terminal side apparatus may switch to the first cell when the handover condition 1 is met. For another example, if the second message indicates to evaluate a handover condition 1 and a handover condition 2 in the K handover conditions, the terminal side apparatus may switch to the first cell when either of the handover condition 1 and the handover condition 2 is met.

In a possible design, the K handover conditions include a first handover condition and a second handover condition; and a type of the first handover condition is different from a type of the second handover condition; when the type of the first handover condition is the same as the type of the second handover condition, thresholds corresponding to the first handover condition and the second handover condition are different; or the first handover condition starts to be evaluated after the first message is received, and the second handover condition starts to be evaluated after the second message is received.

In a possible design, that the handover condition of the first cell is met includes at least one of the following: Signal quality of a source cell is less than or equal to a first threshold; signal quality of the first cell is greater than or equal to a second threshold; and a difference between the signal quality of the first cell and the signal quality of the source cell is greater than or equal to a third threshold.

In a possible design, a handover condition of the first cell corresponds to a first transmission configuration indicator TCI state; and switching to the first cell includes: accessing the first cell based on the first TCI state corresponding to the handover condition of the first cell.

In a possible design, the first message or the second message further indicates that the handover condition of the first cell corresponds to the first TCI state.

In a possible design, switching to the first cell includes: accessing the first cell in a random access-less manner.

In a possible design, the second message includes timing advance TA information of the first cell; or the method further includes: receiving the TA information of the first cell after the second message, where the TA information of the first cell is used to access the first cell in a random access-less manner.

In this way, the terminal side apparatus may obtain the TA information of the first cell before handover, to access the first cell in a random access-less manner, to reduce a handover delay and improve handover efficiency.

In a possible design, after switching to the first cell, the method further includes: canceling conditional handover that meets a handover condition of another cell. In this way, a problem that the terminal side apparatus frequently performs handover because a handover conditions of a plurality of cells are met can be avoided.

**According to a second aspect**, an embodiment of this application provides a communication method. The method may be applied to a first network side apparatus. The first network side apparatus may be a first network device or a component (for example, a chip or a circuit) in the first network device. The first network device is, for example, a CU of a source access network node, a DU of the source access network node, or the source access network node. For example, in the method, the first network side apparatus sends a first message to a terminal side apparatus, where the first message is used to configure M handover conditions; and sends a second message to the terminal side apparatus, where the second message indicates the terminal side apparatus to evaluate a handover condition of a first cell, the M handover conditions include the handover condition of the first cell, and M is an integer greater than or equal to 1.

In a possible design, the method further includes: sending a third message, where the third message indicates that the terminal side apparatus has been indicated to evaluate the handover condition of the first cell.

In a possible design, the method further includes: sending a fourth message, where the fourth message indicates that TA information of the first cell has been sent to the terminal side apparatus. Alternatively, the fourth message indicates that a TA command has been sent to the terminal side apparatus.

In a possible design, the third message further indicates a probability that the terminal side apparatus switches to the first cell.

In a possible design, the M handover conditions correspond to N cells, the N cells include the first cell, N is less than or equal to M, and N is an integer greater than or equal to 1.

In a possible design, the method further includes: receiving a fifth message, where the fifth message is used to request to configure handover conditions of the N cells.

In a possible design, the second message includes identifier information corresponding to the first cell, and/or identifier information of the handover condition of the first cell.

In a possible design, the first message further indicates the terminal side apparatus not to evaluate the handover condition of the first cell.

In a possible design, the second message includes first indication information, and the first indication information indicates to perform conditional handover; and
the second message further includes second indication information, and the second indication information indicates to evaluate the handover condition of the first cell in a case of conditional handover.

In a possible design, the first message or the second message further indicates that the condition of the first cell corresponds to a first TCI state.

In a possible design, the second message includes the TA information of the first cell; or the method further includes: sending the TA information of the first cell to the terminal side apparatus after the second message, where the TA information of the first cell is used by the terminal side apparatus to access the first cell in a random access-less manner.

In a possible design, the handover condition of the first cell includes K handover conditions, where K is an integer greater than or equal to 1, and the K handover conditions include a first handover condition and a second handover condition; and a type of the first handover condition is different from a type of the second handover condition; when the type of the first handover condition is the same as the type of the second handover condition, thresholds corresponding to the first handover condition and the second handover condition are different; or the first handover condition starts to be evaluated after the first message is received, and the second handover condition starts to be evaluated after the second message is received.

**According to a third aspect**, an embodiment of this application provides a communication method. The method may be applied to a second network side apparatus. The second network side apparatus may be a second network device or a component (for example, a chip or a circuit) in the second network device. The second network device is, for example, a CU of a candidate access network node, a DU of the candidate access network node, or the candidate access network node. For example, in the method, the second network side apparatus receives a third message, where the third message indicates that a terminal side apparatus has been indicated to evaluate a handover condition of a first cell; and determines, in response to the third message, that the terminal side apparatus has been indicated to evaluate the handover condition of the first cell.

In a possible design, the method further includes: receiving a fourth message, where the fourth message indicates that timing advance TA information of the first cell has been sent to the terminal side apparatus.

In a possible design, the third message further indicates a probability that the terminal side apparatus switches to the first cell.

In addition, an embodiment of this application further provides a communication method. The method may be applied to the second network side apparatus. The second network side apparatus may be the second network device or the component (for example, the chip or the circuit) in the second network device. The second network device is, for example, the CU of the candidate access network node. For example, in the method, the CU of the candidate access network node receives a sixth message from a CU of a source access network node, where the sixth message is used to request an early synchronization configuration for first identifier information, and the early synchronization configuration belongs to a configuration of the first cell; sends a seventh message to a DU of the candidate access network node based on the sixth message, where the seventh message is used to request the early synchronization configuration for the first identifier information and second identifier information, and the second identifier information identifies the source access network node (or the CU of the source access network node); receives the early synchronization configuration, the first identifier information, and the second identifier information from the DU; and sends the early synchronization configuration and the first identifier information to the CU.

In a possible design, the method further includes: receiving the TA information of the first cell, random access resource information corresponding to the TA information, the first identifier information, and the second identifier information from the DU of the candidate access network node, where the first identifier information corresponds to a DU of the source access network node, and the second identifier information identifies the source access network node (or the CU of the source access network node); and sending the TA information of the first cell, the random access resource information corresponding to the TA information, and the first identifier information to the CU of the source access network node.

It may be understood that the communication methods in the second aspect and the third aspect correspond to that in the first aspect. For beneficial effects of related technical features in the second aspect and the third aspect, refer to descriptions in the first aspect. Details are not described again.

**According to a fourth aspect**, this application provides a communication apparatus. The communication apparatus can implement a function in any one of the first aspect to the third aspect. For example, the communication apparatus includes a corresponding module, unit, or means for performing operations in any one of the first aspect to the third aspect. The function, the unit, or the means may be implemented by software, hardware, or hardware executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in any one of the first aspect to the third aspect.

In a possible design, the communication apparatus includes a processor, and the processor may be configured to be coupled to a memory. The memory may store a necessary computer program or necessary instructions for implementing the function in any one of the first aspect to the third aspect. The processor may execute the computer program or the instructions stored in the memory. When the computer program or the instructions are executed, the communication apparatus is enabled to implement the method in any possible design or implementation in the first aspect to the third aspect.

In a possible design, the communication apparatus includes a processor and a memory. The memory may store a necessary computer program or necessary instructions for implementing the functions in any one of the first aspect to the third aspect. The processor may execute the computer program or the instructions stored in the memory. When the computer program or the instructions are executed, the communication apparatus is enabled to implement the method in any possible design or implementation in the first aspect to the third aspect.

In a possible design, the communication apparatus includes a processor and an interface circuit. The processor is configured to communicate with another apparatus through an interface circuit, and perform the method in any possible design or implementation in the first aspect to the third aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect**, this application provides a communication system. The communication system may include a first network side apparatus and a terminal side apparatus. The first network side apparatus is configured to perform the method in the first aspect, and the terminal side apparatus is configured to perform the method in the second aspect. Optionally, the communication system further includes a second network side apparatus, and the second network side apparatus is configured to perform the method in the third aspect.

**According to a sixth aspect**, this application provides a computer-readable storage medium. The computer-storage medium stores computer-readable instructions. When a computer reads and executes the computer-readable instructions, the computer is enabled to perform the method in any possible design in the first aspect to the third aspect.

For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

**According to a seventh aspect**, this application provides a computer program product. When a computer reads and executes the computer program product, the computer is enabled to perform the method in any possible design in the first aspect to the third aspect.

**According to an eighth aspect**, this application provides a chip (or a chip system). The chip includes a processor. The processor is coupled to a memory to read and execute a software program stored in the memory, to implement the method in any possible design in the first aspect to the third aspect.

### BRIEF DESCRIPTION OF DRAWINGS

FIG. 1 is a diagram of a communication system applicable to an embodiment of this application;
FIG. 2A is a diagram of a CU-DU split architecture according to an embodiment of this application;
FIG. 2B is a diagram of another CU-DU split architecture according to an embodiment of this application;
FIG. 3 is a schematic flowchart of LTM handover according to an embodiment of this application;
FIG. 4 is a schematic flowchart of conditional handover according to an embodiment of this application;
FIG. 5 is a schematic flowchart corresponding to a communication method according to Embodiment 1 of this application;
FIG. 6 is a schematic flowchart corresponding to a communication method according to Embodiment 2 of this application;
FIG. 7 is a schematic flowchart corresponding to a communication method according to Embodiment 3 of this application;
FIG. 8 is a schematic flowchart corresponding to a communication method according to Embodiment 4 of this application;
FIG. 9 is a schematic flowchart corresponding to a communication method according to Embodiment 5 of this application;
FIG. 10 is a possible example block diagram of an apparatus according to an embodiment of this application;
FIG. 11 is a diagram of a structure of a network side apparatus according to an embodiment of this application; and
FIG. 12 is a diagram of a structure of a terminal side apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, and a future evolved communication system like a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that: With evolution of a network architecture and emergence of a new service scenario, the technical solutions provided in embodiments of this application are also applicable to similar technical problems.

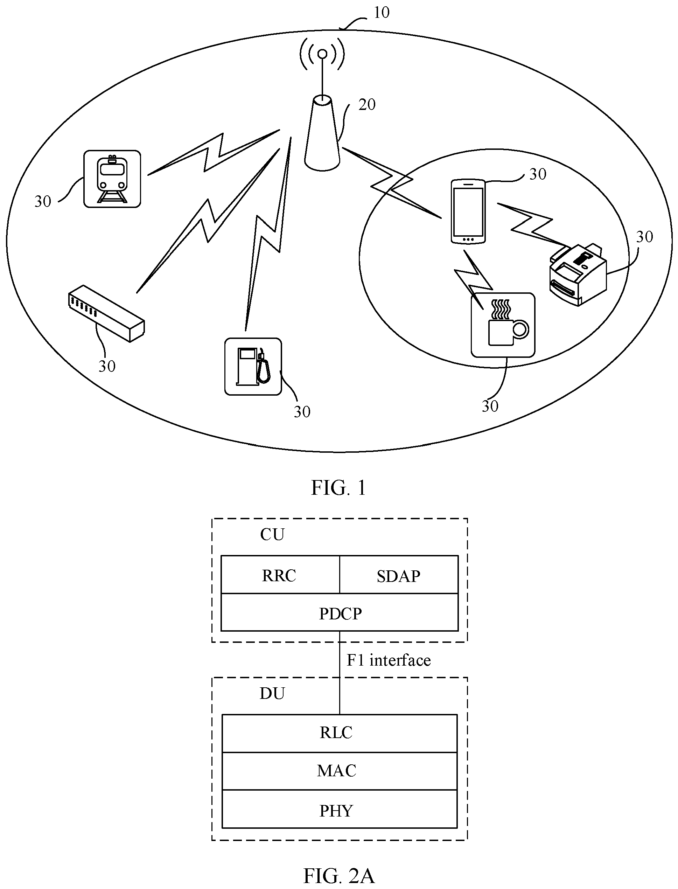

For ease of understanding embodiments of this application, a communication system shown in FIG. 1 is first used as an example to describe in detail a communication system applicable to embodiments of this application. As shown in FIG. 1, a communication system 10 includes one or more access network nodes 20 and one or more terminals 30. An interface between the access network node and the terminal may be a Uu interface (or referred to as an air interface), and data transmission may be performed between the access network node 20 and the terminal 30 by using an air interface resource. For example, the terminal may be located in communication coverage of one or more cells of the access network node, and there may be one or more cells (that is, a serving cell of the terminal) that provide a service for the terminal.

### (1) Terminal

The terminal may be a device that accesses the foregoing communication system and has a wireless transceiver function. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a pad (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### (2) Access network node

The access network node is a device located on a network side of the foregoing communication system and has a wireless transceiver function. The access network node may also be referred to as an access network device or a radio access network device.

For example, the access network node in embodiments of this application may be an access point (access point, AP) like a home gateway, a router, a server, a switch, or a bridge in a Wi-Fi system, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a wireless relay node, a wireless backhaul node, a transmission point (transmission and reception point, TRP; or transmission point, TP), or the like, or may be a next-generation NodeB (next generation NodeB, gNB) in a 5G system, or a network node that forms a gNB, for example, a road side unit (road side unit, RSU) that has a base station function, or may be a satellite or a base station in various forms in the future.

### (3) Communication between a terminal and an access network node

Communication between the terminal and the access network node is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY); and a user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of a 3rd generation partnership project (3rd generation partnership project, 3GPP).

### (4) CU-DU split architecture

For example, in some possible network structures, an access network node may include one or more central units (central units, CUs) and one or more distributed units (distributed units, DUs), and a plurality of DUs may be centrally controlled by one CU. This architecture may be referred to as the CU-DU split architecture. For example, an interface between the CU and the DU may be referred to as an F1 interface. A control plane (control plane, CP) interface may be an F1-C interface, and a user plane (user plane, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, the RLC layer and the MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

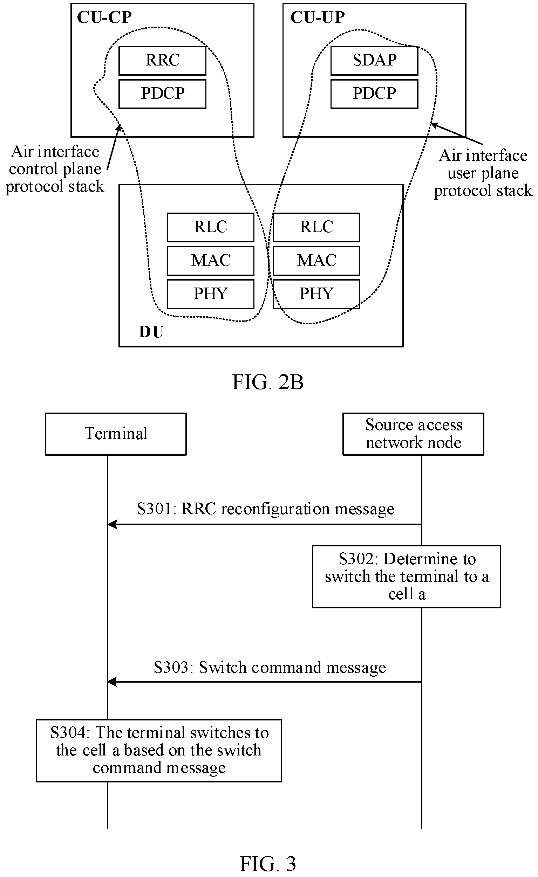

Further, a function of the CU may be implemented by a same entity, or may be implemented by different entities. For example, functions of the CU may be further divided. To be specific, a control plane and a user plane are split and implemented by different entities: a control plane CU entity (that is, a CU-CP entity) and a user plane CU entity (that is, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to the plurality of coordinated CU-CPs. This improves flexibility of the CU-CP. FIG. 2B is a diagram of distribution of air interface protocol stacks. As shown in FIG. 2B, for both a user plane and a control plane, an air interface protocol stack may be that an RLC layer, a MAC layer, and a PHY layer are on a DU, and a PDCP layer and upper protocol layers are on a CU.

It should be noted that in the architectures shown in FIG. 2A and FIG. 2B, signaling generated by the CU may be sent to a terminal via the DU, or signaling generated by a terminal may be sent to the CU via the DU. The DU may transparently transmit the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed to be data at a physical layer and the data is sent to the terminal, or is converted from received data at the physical layer. In this architecture, the signaling at the RRC layer or the PDCP layer may also be considered as being sent by the DU, or sent by the DU and a radio frequency apparatus.

It may be understood that a quantity of access network nodes and a quantity of terminals included in the communication system are not limited in embodiments of this application. Moreover, in addition to the access network node and the terminal, the communication system may further include another device or network element, for example, a core network device or a relay device. This is not limited in embodiments of this application.

The following first explains and describes related terms in embodiments of this application. Unless otherwise specified, these explanations are intended to support meanings of the related terms and make embodiments of this application easier to understand, and should not be considered as strict limitations on the related terms in the protection scope claimed in this application.

### (1) Cell handover scenario

When a terminal switches (switch or handover) between different cells, there may be a plurality of specific handover scenarios. For example, the handover scenarios may be classified based on a location relationship between a source cell and a target cell.

When an access network node uses a CU-DU split architecture (for example, the access network node includes one CU and a plurality of DUs, the plurality of DUs are centrally controlled by one CU, and each of the plurality of DUs may include one or more cells), the location relationship between the source cell and the target cell may be whether the source cell and the target cell belong to a same CU and/or a same DU. "The DU includes one or more cells" may also be described as "the DU manages or controls one or more cells", "one or more cells of the DU", or "one or more cells belong to the DU". Three possible handover scenarios, that is, Scenario 1 to Scenario 3, are described herein.

Scenario 1: The terminal switches from a cell of the DU to another cell of the DU. In other words, the source cell and the target cell of the terminal belong to a same DU. Cell handover corresponding to Scenario 1 is intra-DU (intra-DU) handover.

Scenario 2: The terminal switches from a cell of a DU 1 controlled by the CU to a cell of a DU 2 controlled by the CU. In this case, the DU 1 may be referred to as a source DU, and the DU 2 may be referred to as a target DU. In other words, the source cell and the target cell of the terminal belong to different DUs controlled by a same CU. Cell handover corresponding to Scenario 2 is inter-DU (inter-DU) handover.

Scenario 3: The terminal switches from a cell of a DU 1 controlled by a CU 1 to a cell of a DU 3 controlled by a CU 2. In this case, the CU 1 may be referred to as a source CU, and the CU 2 may be referred to as a target CU. In other words, the source cell and the target cell of the terminal belong to different DUs controlled by different CUs. Cell handover corresponding to Scenario 2 is inter-CU (inter-CU) handover.

When the access network node is considered as a whole (for example, a gNB), the location relationship between the source cell and the target cell may be whether the source cell and the target cell belong to a same access network node. Two possible handover scenarios, that is, Scenario 4 and Scenario 5, are described herein.

Scenario 4: The terminal switches from a cell of an access network node 1 to a cell of an access network node 2. In this case, the access network node 1 may be referred to as a source access network node, and the access network node 2 may be referred to as a target access network node. In other words, the source cell and the target cell of the terminal belong to different access network nodes. Cell handover corresponding to Scenario 4 is inter-gNB (inter-gNB) handover.

Scenario 5: The terminal switches from a cell of the access network node to another cell of the access network node. In other words, the source cell and the target cell of the terminal belong to a same access network node. Cell handover corresponding to Scenario 5 is intra-gNB (intra-gNB) handover.

The communication method provided in embodiments of this application is applicable to any one of the foregoing scenarios.

### (2) Layer 1/Layer 2 triggered mobility handover

Cell handover may be classified into two types. One is cell handover implemented based on a layer 1/layer 2. This may be referred to as layer 1/layer 2 handover or layer 1/layer 2 triggered mobility (L1/L2 triggered mobility, LTM) handover. The other is cell handover implemented based on a layer 3. This may be referred to as layer 3 handover (L3 handover). The layer 1 may be a physical layer, the layer 2 may be any one or more of a MAC layer, an RLC layer, a PDCP layer, and an SDAP layer, and the layer 3 may be an RRC layer. Because the layer 1/layer 2 are lower than the RRC layer (the layer 3) in a protocol stack, the layer 1/layer 2 handover may also be referred to as low-layer handover, bottom-layer handover, or lower-layer handover. A name of a specific handover technology is not limited in this application.

Compared with the layer 3 handover, the LTM handover can effectively reduce a handover delay. A reason is as follows: For the layer 3 handover, in a CU-DU split architecture, a CU receives a measurement result (the measurement result is forwarded by a DU to the CU) of a terminal; determines, based on the measurement result, whether to initiate handover; and if determining to initiate the handover, sends a switch command to the DU, and the DU sends the switch command to the terminal. This process includes communication interaction (that is, interaction on an F1 interface) between the CU and the DU, and a maximum transmission delay of the F1 interface is approximately 3 ms to 10 ms. Consequently, a specific handover delay is caused. However, an LTM handover decision is delivered from the CU to the DU. In other words, the DU determines, based on the measurement result of the terminal, whether to initiate handover (LTM cell switch), and directly sends the switch command message to the terminal, so that F1 interaction can be effectively reduced, and the handover delay can be reduced.

FIG. 3 is a schematic flowchart of a possible implementation of the LTM handover. As shown in FIG. 3, the procedure includes the following steps.

S301: A source access network node sends an RRC reconfiguration message to a terminal, and correspondingly, the terminal receives the RRC reconfiguration message.

For example, after the terminal accesses a cell of the source access network node, the source access network node may obtain LTM configuration information of a plurality of candidate cells, and send the LTM configuration information of the plurality of candidate cells to the terminal by using the RRC reconfiguration message.

S302: The source access network node determines to switch the terminal to a cell a.

S303: The source access network node sends a switch command message to the terminal, where the switch command message indicates the terminal to switch to the cell a, and correspondingly, the terminal receives the switch command message.

For example, the terminal may send a measurement report to the source access network node, where the measurement report includes lower-layer measurement results of the plurality of candidate cells. If the source access network node determines, based on the lower-layer measurement results of the plurality of candidate cells, to switch the terminal to the cell a, the source access network node sends the switch command message to the terminal. The lower-layer measurement result may be a layer 1/layer 2 measurement result.

S304: The terminal switches to the cell a based on the switch command message.

It may be understood that S301 to S304 are merely an example of a brief procedure, and specific implementations are not limited in embodiments of this application.

### (3) Conditional handover

Conditional handover (conditional handover, CHO) is handover performed by a terminal when one or more handover execution conditions (handover execution conditions) are met. The handover execution condition may also be referred to as a handover condition or an execution condition. For example, a source access network node configures a handover condition for a specific candidate cell, and sends the handover condition to the terminal. Subsequently, when the handover condition is met, the terminal may switch to the candidate cell.

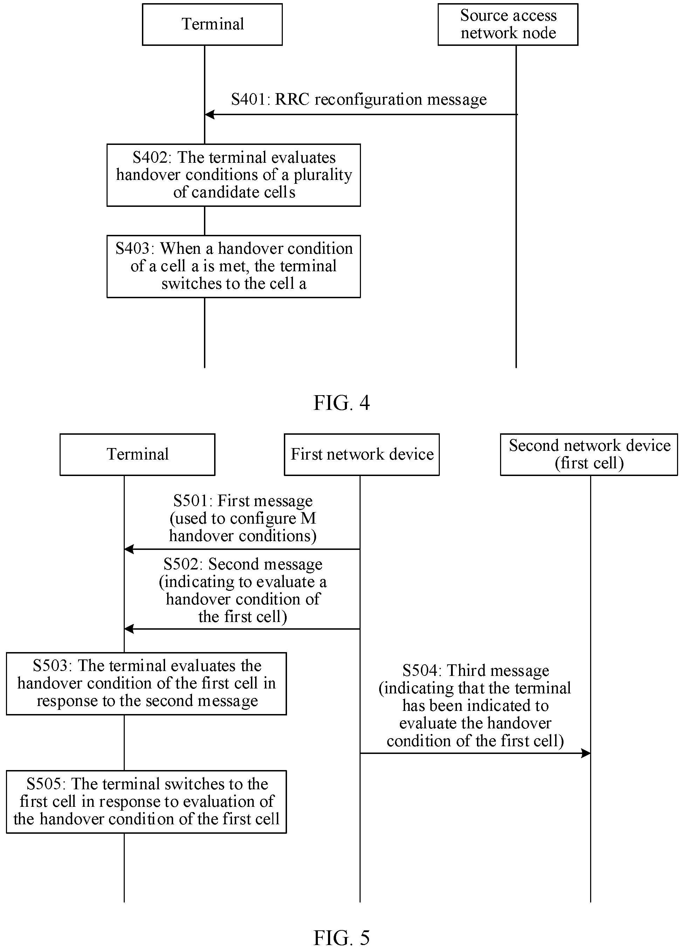

FIG. 4 is a schematic flowchart of a possible implementation of the CHO. As shown in FIG. 4, the procedure includes the following steps.

S401: The source access network node sends an RRC reconfiguration message to the terminal, and correspondingly, the terminal receives the RRC reconfiguration message.

For example, after the terminal accesses a cell of the source access network node, the source access network node may obtain CHO configuration information of a plurality of candidate cells, and send the CHO configuration information of the plurality of candidate cells to the terminal by using the RRC reconfiguration message. For example, the plurality of candidate cells include a cell a, and CHO configuration information of the cell a includes configuration information of a handover condition of the cell a.

S402: The terminal evaluates handover conditions of the plurality of candidate cells based on the CHO configuration information of the plurality of candidate cells.

S403: When the handover condition of the cell a is met, the terminal switches to the cell a.

It may be understood that S401 to S403 are merely an example of a brief procedure, and specific implementations are not limited in embodiments of this application. In the conditional handover procedure shown in FIG. 4, after the source access network node sends the RRC reconfiguration message to the terminal, the terminal immediately evaluates the handover condition of the candidate cell based on the configuration information that is of the handover condition of the candidate cell and that is in the RRC reconfiguration message. For ease of description, the conditional handover shown in FIG. 4 is referred to as conventional conditional handover in embodiments of this application.

### (4) Handover condition

In a possible implementation, one handover condition refers to one or more handover events. The handover event includes Event A3, Event A5, another event, or the like.

Event A3: A difference between signal quality of a candidate cell and signal quality of a serving cell becomes better (better) than a third threshold, or is better than the third threshold (that is, greater than or equal to the third threshold).

Event A5: Signal quality of a candidate cell becomes better than a second threshold (that is, greater than or equal to the second threshold), and signal quality of a serving cell becomes worse than a first threshold (that is, less than or equal to the first threshold).

It should be noted that the signal quality may be beam-level signal quality, or may be cell-level signal quality. The signal quality includes at least one of the following: reference signal received power (reference signal received power, RSRP), reference signal received quality (reference signal received quality, RSRQ), or signal to interference plus noise ratio (signal to interference plus noise ratio, SINR). The signal quality is obtained by measuring a synchronization signal and physical broadcast channel block (synchronization signal and physical broadcast channel block, SSB) or a channel state information reference signal (channel state information reference signal, CSI-RS).

For a handover event, a terminal may evaluate the event, to determine that "an entering condition is met or a leaving condition is met". For example, for Event A3, "the entering condition of the event is met" may be understood as that the difference between the signal quality of the candidate cell and the signal quality of the serving cell is greater than or equal to the third threshold, and "the leaving condition of the event is met" may be understood as that the difference between the signal quality of the candidate cell and the signal quality of the serving cell is less than the third threshold. For Event A5, "the entering condition of the event is met" may be understood as that the signal quality of the candidate cell is greater than or equal to the second threshold, and the signal quality of the serving cell is less than or equal to the first threshold, and "the leaving condition of the event is met" may be understood as that the signal quality of the candidate cell is less than the second threshold, and the signal quality of the serving cell is greater than the first threshold. For example, when the terminal moves toward the candidate cell, the entering condition may be met. After the entering condition is met, the terminal moves toward the serving cell, and the leaving condition may be met. In the following embodiments of this application, "the handover condition is met" may mean "the entering condition is met".

Further, optionally, a handover condition of the candidate cell corresponds to a transmission configuration indicator (transmission configuration indicator, TCI) state of the candidate cell. The TCI state may indicate beam information. Different handover conditions correspond to different TCI states, and different TCI states are associated with different reference signals. A "handover condition a1" is used as an example. Assuming that the handover condition a1 corresponds to a TCI state 1, the terminal receives a reference signal associated with the TCI state 1, to obtain signal quality of a cell a through measurement based on the reference signal associated with the TCI state 1, to evaluate the handover condition a1 based on the signal quality of the cell a.

It can be learned from the foregoing descriptions about the LTM handover that, in the LTM handover, a network device determines, based on a measurement result reported by the terminal, whether to trigger handover, and if the handover is triggered, sends a switch command to the terminal, so that the terminal switches from a source cell to a target cell based on the switch command. However, a rapid change of signal quality of the source cell, for example, sudden deterioration of the signal quality of the source cell, may lead to a failure of sending of the switch command, resulting in poor handover robustness.

In view of this, embodiments of this application provide a communication method, to improve handover robustness. The communication method provided in embodiments of this application relates to a terminal side apparatus and at least one network side apparatus. The "terminal side apparatus" may be a terminal, or may be a component in the terminal, for example, a chip or a chip system disposed in the terminal. The "network side apparatus" may be a network device, or may be a component in the network device, for example, a chip or a chip system disposed in the network device. The network device may be an access network node, a CU of the access network node, a DU of the access network node, or the like. In embodiments of this application, "the terminal side apparatus is the terminal, and the network side apparatus is the network device" is used as an example for description.

With reference to some handover scenarios described above, the following describes the network device related to the communication method provided in embodiments of this application.
(1) In the intra-DU handover (Scenario 1), the network device in embodiments of this application includes a CU and a DU managed by the CU, and both a source cell and a candidate cell of the terminal belong to the DU.
(2) In the inter-DU handover (Scenario 2), the network device in embodiments of this application includes a CU, a first DU managed by the CU (that is, a source DU of the terminal), and a second DU managed by the CU (that is, a candidate DU of the terminal). The first DU, the second DU, and the CU may belong to a same access network node (for example, a gNB). In embodiments of this application, if the terminal switches to a cell managed by the candidate DU, the candidate DU may also be referred to as a target DU. For other similar parts (for example, a candidate cell and a candidate access network node), reference may be made for processing.
(3) In the inter-CU handover (Scenario 3), the network device in embodiments of this application includes a first CU, a first DU managed by the first CU (that is, a source DU of the terminal), a second CU, and a second DU managed by the second CU (that is, a candidate DU of the terminal). The first CU and the first DU belong to a first access network node (a source access network node), and the second CU and the second DU belong to a second access network node (a candidate access network node).
(4) In the inter-gNB handover (Scenario 4), the network device in embodiments of this application may include a first access network node (a source access network node) and a second access network node (a candidate access network node).
(5) In the intra-gNB handover (Scenario 5), the network device in embodiments of this application is an access network node (for example, a g-NB), and both a source access network node and a candidate access network node of the terminal are the access network node.

For example, in the communication method provided in embodiments of this application, after configuring M handover conditions for the terminal, the network device indicates the terminal to evaluate a handover condition of a first cell, so that the terminal evaluates the handover condition of the first cell based on the indication of the network device, and switches to the first cell when an evaluation result is determined as that the handover condition of the first cell is met. Such handover may be referred to as conditional LTM handover. Different from the conventional conditional handover, after the network device configures the handover condition of the first cell for the terminal, the terminal does not immediately evaluate the handover condition of the first cell, but evaluates the handover condition of the first cell after receiving the indication of the network device.

The communication method provided in embodiments of this application is described in detail below with reference to Embodiment 1 to Embodiment 4.

### Embodiment 1

In Embodiment 1, interaction between a first network device, a second network device, and a terminal is used as an example for description.

**For Scenario 1**, the first network device and the second network device may be a same DU. In this case, a related operation of interaction between the first network device and the second network device may not be performed. **For Scenario 2**, the first network device may be a first DU (that is, a source DU), and the second network device may be a second DU (that is, a candidate DU). The first network device and the second network device perform transit communication via a CU, that is, the first DU -> the CU -> the second DU, or the second DU -> the CU -> the first DU. For the transit communication, same information is transferred between different nodes, and names of messages carrying the information may be the same or may be different. This is not limited. For example, a specific implementation of "the first network device sends a third message to the second network device" is: The first network device sends a third message a to the CU; and after receiving the third message a, the CU sends a third message b to the second network device. Information carried in the third message a is the same as that carried in the third message b, and message names of the third message a and the third message b may be the same or may be different. The second network device sends a corresponding message to the first network device in the same way, that is, the message is transited via the CU. **For Scenario 3**, the first network device may be a first DU managed by a first CU, and the second network device may be a second DU managed by a second CU. The first network device and the second network device perform transit communication via the first CU and the second CU, that is, the first DU -> the first CU -> the second CU -> the second DU, or the second DU -> the second CU -> the first CU -> the first DU. **For Scenario 4**, the first network device may be a first access network node, the second network device may be a second access network node, and the first access network node and the second access network node may communicate with each other through an Xn interface. **For Scenario 5**, the first network device and the second network device may be a same access network node. In this case, a related operation of interaction between the first network device and the second network device may not be performed.

**FIG. 5** is a schematic flowchart corresponding to a communication method according to Embodiment 1 of this application. As shown in FIG. 5, the method includes the following steps.

**S501**: A first network device sends a first message to a terminal, where the first message is used to configure M handover conditions, and correspondingly, the terminal receives the first message.

### (1) Descriptions of the M handover conditions

The M handover conditions correspond to N cells, where N is less than or equal to M, and M and N are integers greater than or equal to 1. The N cells are candidate cells of the terminal, and a first cell in the N cells is a cell managed by a second network device. For example, N=1, and the N cells include the first cell. In this case, all the M handover conditions are handover conditions of the first cell, that is, the M handover conditions correspond to the first cell. For another example, N=2, and the N cells include the first cell and a second cell. In this case, the M handover conditions include a handover condition of the first cell and a handover condition of the second cell, that is, a part of the M handover conditions correspond to the first cell, and the other part of handover conditions correspond to the second cell. A quantity of handover conditions corresponding to the first cell and a quantity of handover conditions corresponding to the second cell may be the same or different.

For example, the handover condition of the first cell includes K conditions (that is, all or a part of the M handover conditions), K is less than or equal to M, and K is an integer greater than or equal to 1. For example, the K handover conditions include a first handover condition and a second handover condition.

In an example, a type of the first handover condition is different from a type of the second handover condition. Types of different handover conditions may be different events. For example, the first handover condition is Event A3, and the second handover condition is Event A5.

In another example, a type of the first handover condition is the same as a type of the second handover condition, that is, the first handover condition and the second handover condition correspond to a same event, but have different thresholds. For example, the first handover condition is Event A3, the second handover condition is another Event A3, and thresholds of the two Events A3 are different. For another example, the first handover condition is Event A5, the second handover condition is another Event A5, and thresholds of the two Events A5 are different.

In another example, the first handover condition starts to be evaluated after the first message is received, and the second handover condition starts to be evaluated after a second message is received. In other words, the terminal starts to evaluate the first handover condition and the second handover condition on different occasions. For example, the first handover condition is a handover condition corresponding to conventional conditional handover (that is, non-conditional LTM handover), and the second handover condition is a handover condition corresponding to conditional LTM handover.

In another example, the first handover condition corresponds to random access-based conditional handover, and the second handover condition corresponds to random access-less conditional handover. In this case, when the first handover condition of the first cell is met, the terminal accesses the first cell in a random access manner; and when the second handover condition of the first cell is met, the terminal accesses the first cell in a random access-less manner. Random access-less may also be referred to as random access channel (random access channel, RACH)-less (that is, RACH-less), and random access-less may also be understood as random access-skip (RACH-skip).

In addition, the first message may further indicate identifier information of TCI states respectively corresponding to the K conditions, and the second handover condition corresponds to identifier information of a first TCI state. Specifically, the first message includes the identifier information of the first TCI state, and the identifier information of the first TCI state indicates that the identifier information of the first TCI state corresponds to the second handover condition.

### (2) Descriptions of content of the first message

For example, the first message is an RRC message, for example, an RRC reconfiguration message.

The first message may include configuration information of the M handover conditions. The configuration information of the handover condition includes a threshold. For example, for Event A3, the threshold is a third threshold, and for Event A5, the threshold is a first threshold and a second threshold. For specific descriptions, refer to the foregoing content.

For example, the first message includes configuration information of the first handover condition and configuration information of the second handover condition. The second handover condition is used as an example (for another handover condition, refer to this for understanding). The configuration information of the second handover condition includes identifier information of the second handover condition and a threshold of the second handover condition. For example, the second handover condition may be Event A3 or Event A5.

Optionally, the first message further indicates not to evaluate the handover condition of the first cell after the first message is received. For example, the first message further indicates not to evaluate the second handover condition of the first cell after the first message is received. The first message indicates, in a plurality of implementations, not to evaluate the second handover condition of the first cell after the first message is received.

In a possible implementation, states of the handover condition include an active state and an inactive state. When the state of the handover condition is the active state, the terminal evaluates the handover condition; or when the state of the handover condition is the inactive state, the terminal does not evaluate the handover condition.

Specifically, there is any one of the following manners for indicating not to evaluate the handover condition of the first cell, for example, an indication manner 1 or an indication manner 2.

Indication manner 1: explicit indication. The first message includes initial state information of the second handover condition. For example, the initial state information of the second handover condition may be included in the configuration information of the second handover condition. The initial state information of the second handover condition indicates that an initial state of the second handover condition is the inactive state. In other words, the first network device indicates, by using the first message, that the initial state of the second handover condition is the inactive state, to indicate the terminal not to evaluate the second handover condition after receiving the first message.

Indication manner 2: implicit indication. The first message includes an information element (information element, IE) corresponding to the conventional conditional handover and an information element corresponding to the conditional LTM handover. The configuration information of the first handover condition is included in the information element corresponding to the conventional conditional handover, and the configuration information of the second handover condition is included in the information element corresponding to the conditional LTM handover. In other words, the first network device indicates, by using the first message, that the second handover condition is the handover condition corresponding to the conditional LTM handover, to indicate the terminal to consider by default, after receiving the first message, that the second handover condition is in the inactive state, that is, not to evaluate the second handover condition.

Optionally, the first message further includes configuration information for early synchronization with the first cell, and the early synchronization includes early uplink synchronization and/or early downlink synchronization. Configuration information for early uplink synchronization may include random access configuration information, for example, time-frequency resource information (including a first resource) for random access and/or index information of a random access preamble (including a first preamble). Configuration information for early downlink synchronization includes configuration information of a transmission configuration indicator (transmission configuration indicator, TCI) state. It should be understood that a TCI state may indicate beam information.

It may be understood that the first message further includes other possible information, for example, configured grant (configured grant, CG) resource information allocated by the second network device to the terminal for the first cell. This is not specifically limited.

For example, the M handover conditions (and initial states of the M handover conditions) may be determined by the first network device. For example, the first network device receives a fifth message (refer to Embodiment 2 or Embodiment 3), and then determines the M handover conditions (and the initial states of the M handover conditions) in response to the fifth message.

**S502**: The first network device sends the second message to the terminal, where the second message indicates to evaluate the handover condition of the first cell, and correspondingly, the terminal receives the second message.

Some possible implementations of the second message are described herein with reference to Implementation 1 to Implementation 3.

### (1) Implementation 1

In Implementation 1, the second message may be a cell switch command (cell switch command) message, for example, a MAC control element (control element, CE). The cell switch command message may also be referred to as a switch command message.

In an example, the second message includes first indication information and second indication information. The first indication information indicates conditional handover (that is, the conditional LTM handover), and the second indication information indicates to evaluate the handover condition of the first cell in a case of the conditional LTM handover. The first indication information may include one bit. When a value of the bit is 1, the first indication information indicates that the second message is for the conditional LTM handover. In this case, the second message further includes the second indication information. When a value of the bit is 0, the first indication information indicates another handover scenario (for example, the non-conditional LTM handover), and the another handover is network-triggered handover. In this case, the second message does not need to include the second indication information, in other words, does not need to indicate the terminal to evaluate the handover condition of the first cell. In this example, the second message (that is, a same MAC CE) may be reused for both a conditional LTM switch command and a non-conditional LTM switch command.

In another example, the second message includes second indication information, but does not include first indication information. In this example, the second message is a dedicated message of the conditional LTM handover.

In this implementation, when the handover condition of the first cell in S503 is met, the terminal accesses the first cell in a random access manner.

### (2) Implementation 2

In Implementation 2, the second message may be a cell switch command message. In addition to the second indication information (and the first indication information), the second message further includes TA information of the first cell. The TA information of the first cell indicates a TA of the first cell. When the condition of the first cell is met, the terminal accesses the first cell in a random access (or physical uplink shared channel (physical uplink share channel, PUSCH) access)-less manner based on the TA of the first cell.

For example, before sending the second message, the first network device indicates the terminal to perform early synchronization with the first cell, so that the first network device obtains the TA information of the first cell by using a process of early synchronization with the first cell.

A specific procedure of early synchronization is as follows: The first network device sends a TCI state activation indicator for the first cell to the terminal, so that the terminal may complete early downlink synchronization with the first cell based on a TCI state activation indicator for activation; and/or the first network device sends a physical downlink control channel (physical downlink control channel, PDCCH) order (PDCCH order) to the terminal. The PDCCH order indicates the terminal to send the first preamble in the first cell by using the first resource. Correspondingly, after receiving the PDCCH order, the terminal may send the first preamble on the first resource. The second network device determines the TA information of the first cell based on the first preamble, and sends the TA information of the first cell to the first network device, so that the first network device may send the TA information of the first cell to the terminal.

In this implementation, when the handover condition of the first cell in S503 is met, the terminal accesses the first cell in a random access-less manner.

### (3) Implementation 3

In Implementation 3, after the second message, the first network device sends TA information of the first cell to the terminal. For example, after the second message, the first network device sends a cell switch command message to the terminal, where the cell switch command message includes the TA information of the first cell. Different from that in Implementation 2, the TA information of the first cell is not carried in the second message, but is carried in another message (for example, the switch command message) after the second message.

For example, when sending the second message, the first network device has not obtained the TA information of the first cell, and after sending the second message, the first network device indicates the terminal to perform early synchronization with the first cell, to obtain the TA information of the first cell. For a specific procedure of early synchronization, refer to the foregoing descriptions. For example, the first network device may indicate, by using the second message, the terminal to perform early synchronization with the first cell and indicate the terminal to evaluate the handover condition of the first cell. Further, after obtaining the TA information of the first cell by using the process of early synchronization with the first cell, the first network device sends the cell switch command message to the terminal.

In this implementation, when the handover condition of the first cell in S503 is met, the terminal accesses the first cell in a random access-less manner.

In addition, there are a plurality of trigger factors for sending the second message by the first network device to the terminal. For example, the first network device obtains location information (for example, RSRP information) of the terminal, and may send the second message to the terminal if it is determined, based on the location information of the terminal, that the terminal may subsequently move to coverage of the first cell, or the terminal may subsequently move out of coverage of a serving cell.

**S503**: The terminal evaluates the handover condition of the first cell in response to the second message.

It should be understood that, the terminal activates the handover condition of the first cell in response to the second message, and when the handover condition is activated, the terminal evaluates the handover condition of the first cell.

For example, the second message (or the second indication information in the second message) includes identifier information corresponding to the first cell, and/or identifier information of the handover condition of the first cell, for example, the identifier information of the second handover condition. The identifier information corresponding to the first cell includes any one of the following: an index value of the first cell, a configuration identifier of the first cell, or a cell global identifier (cell global identifier, CGI) of the first cell. The index value or the configuration identifier of the first cell corresponds to the CGI of the first cell. The identifier information of the second handover condition includes an index value of the second handover condition, and/or the identifier information of the first TCI state corresponding to the second handover condition.

For example, the second message includes the identifier information corresponding to the first cell. To be specific, the second message indicates, by using the identifier information corresponding to the first cell, a handover condition of a specific cell to be evaluated, but does not indicate a specific handover condition of the first cell to be evaluated. In this case, a specific handover condition of the first cell to be evaluated may be predefined or preconfigured; or the terminal evaluates all handover conditions of the first cell by default or evaluates all handover conditions corresponding to the conditional LTM handover of the first cell. This is not specifically limited. It should be noted that "all handover conditions" may be one or more handover conditions.

For another example, the second message includes identifier information corresponding to the first cell and identifier information of the handover condition of the first cell (for example, the identifier information of the second handover condition). To be specific, the second message indicates, by using the identifier information corresponding to the first cell, a handover condition of a specific cell to be evaluated, and indicates, by using the identifier information of the second handover condition, a specific handover condition of the first cell to be evaluated. In this example, the identifier information of the second handover condition may uniquely identify a handover condition in a plurality of handover conditions of the first cell, and handover conditions of different cells may have the same identifier information.

For another example, the second message includes identifier information of the handover condition of the first cell (for example, the identifier information of the second handover condition), the identifier information of the second handover condition is an index value of the second handover condition, the index value is an index value of the second handover condition in the M handover conditions, and may uniquely identify a handover condition in the M handover conditions. In this case, the first network device may first indicate a correspondence between the M handover conditions and the N cells to the terminal, so that the first network device may indicate, by using the identifier information of the second handover condition, a specific handover condition of a specific cell to be evaluated. In this example, handover conditions of different cells have different identifier information.

For another example, the second message includes the identifier information of the first TCI state, and the identifier information of the first TCI state further indicates the terminal to evaluate a handover condition corresponding to the identifier information of the first TCI state. The terminal determines, based on a correspondence between the identifier information of the first TCI state and the second handover condition, to evaluate the second handover condition.

When the second message includes identifier information of the handover condition of the first cell (for example, the identifier information of the second handover condition) or the identifier information of the first TCI state, the terminal evaluates the second handover condition, and does not need to evaluate another handover condition (that is, another handover condition in the inactive state).

Optionally, the second message further includes other possible information, for example, information that indicates "the terminal to initiate random access-less conditional handover". When the second message includes the information, the terminal accesses the first cell in a random access-less manner after evaluating that the handover condition of the first cell is met.

It may be understood that the foregoing descriptions are provided by using the first cell as an example. In another embodiment, the first network device may further indicate the terminal to evaluate handover conditions of one or more other cells. For example, the second message may further indicate to evaluate the handover condition of the second cell, that is, the first network device indicates, by using a same message, the terminal to evaluate handover conditions of a plurality of cells, alternatively, the first network device may indicate, by using a plurality of messages, the terminal to evaluate the handover conditions of the plurality of cells. For example, the first network device sends a second message a and a second message b to the terminal, where the second message a indicates to evaluate the handover condition of the first cell, and the second message b indicates to evaluate the handover condition of the second cell. The second cell is different from the first cell.

**Optionally**, the method further includes S504 and S505.

**S504**: The first network device sends a third message to the second network device, where the third message indicates that the terminal has been indicated to evaluate the handover condition of the first cell, and correspondingly, the second network device receives the third message.

For example, the third message includes the identifier information corresponding to the first cell (for a specific definition, refer to the foregoing descriptions) and third indication information, and the third indication information indicates that the terminal has been indicated to evaluate the handover condition of the first cell. The third message further indicates a probability that the terminal switches to the first cell. For example, the third message further includes probability information 1 and/or probability information 2. The probability information 1 indicates a probability that the terminal switches to (or arrives at) the first cell, the probability information 2 indicates a probability that the terminal switches to (or arrives at) P TCI states (for example, including the first TCI state) of the first cell, and P is an integer greater than or equal to 1. It should be understood that the probability information 1 is a probability for a cell, and the probability information 2 is a probability for a TCI state of the cell. Probabilities for different TCI states may be the same or may be different. Specifically, the first network device estimates, based on the location information and a historical movement trajectory of the terminal, a target cell for conditional handover and probability information 1 and/or probability information 2 of the conditional handover of the target cell. Optionally, the third message further includes other possible information, for example, identifier information of the P TCI states (for example, including the first TCI state) of the first cell, where the P TCI states are active TCI states, or TCI states for direct communication with the terminal.

Optionally, the first network device sends a fourth message to the second network device, where the fourth message indicates that the TA information of the first cell has been sent to the terminal. The fourth message and the third message may be a same message, or may be different messages.

The second network device determines, based on the third message (and the fourth message), that the terminal may switch to the first cell in a conditional handover manner in the future, and then may prepare resources in advance to serve the terminal. In a possible implementation, the second network device determines, based on the third message and the fourth message, that the terminal may switch to the first cell in a manner of random access-less conditional handover in the future, and then may determine a scheduling policy for the terminal. For example, if the second network device receives the third message, and determines, based on probability information (that is, the probability information 1 and/or the probability information 2) in the third message, that a probability that the terminal switches to the first cell is high (greater than a specific threshold), for a CG resource for the terminal, the second network device may attempt to receive data of the terminal on the CG resource of the first cell, and does not allocate a CG resource for the terminal after the third message to another terminal; and/or, the second network device starts to use a dynamic grant (dynamic grant, DG) to schedule the terminal to perform uplink data transmission for the first cell.

It should be noted that, in any embodiment of this application, "the terminal has been indicated to evaluate the handover condition of the first cell" may also be understood as "the second message (that is, the conditional switch command) has been sent to the terminal". In any embodiment of this application, "the TA information of the first cell has been sent to the terminal" may also be understood as "a TA command for the first cell has been sent to the terminal".

**S505**: The terminal switches to the first cell in response to evaluation of the handover condition of the first cell.

For example, in S503, the terminal evaluates the second handover condition of the first cell. When an evaluation result is determined as that the second handover condition of the first cell is met, the terminal switches to the first cell. When the evaluation result is determined as that the second handover condition of the first cell is not met, the terminal does not switch to the first cell, and continues evaluating the handover condition of the first cell.

Specific implementations in which the terminal switches to the first cell are as follows.

In an example, the terminal accesses the first cell in a random access-less manner. Specifically, the terminal accesses the first cell based on the first TCI state and a PUSCH resource, where the first TCI state may correspond to the second handover condition, or may be indicated by the first network device to the terminal. "Accessing the first cell" includes: For example, after sending initial uplink data on the CG resource (that is, a periodic PUSCH resource) of the first cell, the terminal receives feedback information (for example, a PDCCH that carries identifier information of the terminal) for the uplink data from the second network device based on the first TCI state; and correspondingly, the second network device sends the feedback information for the uplink data to the terminal based on the first TCI state. For another example, the terminal receives the DG from the second network device based on the first TCI state; and correspondingly, the second network device sends the DG to the terminal based on the first TCI state. The DG is used by the terminal to send initial uplink data in the first cell. For example, the DG indicates a one-shot (one-shot) PUSCH resource.

In another example, the terminal accesses the first cell in a random access manner. Specifically, the terminal accesses the first cell based on a random access resource.

If the terminal performs early synchronization before switching to the first cell, and obtains the TA information of the first cell, the terminal accesses the first cell in a random access-less manner; or if the terminal does not perform early synchronization before switching to the first cell, and does not obtain the TA information of the first cell, the terminal accesses the first cell in a random access manner.

In addition, if the first network device indicates the terminal to evaluate handover conditions of a plurality of cells, for example, the handover condition of the first cell and the handover condition of the second cell, when evaluation results are determined as that the handover condition of the first cell and the handover condition of the second cell are met, after the terminal switches to the first cell based on that the handover condition of the first cell is met, the terminal may cancel conditional handover of the second cell, that is, the terminal no longer switches to the second cell based on that the handover condition of the second cell is met. Alternatively, after the terminal switches to the second cell when the handover condition of the second cell is met, the terminal may cancel conditional handover of the first cell (or the terminal determines that the handover condition of the first cell is in the inactive state), that is, the terminal no longer switches to the first cell based on that the handover condition of the first cell is met. In this way, a problem that the terminal frequently performs handover because the handover conditions of the plurality of cells are met can be avoided.

It may be understood that for subsequent handover, S502 to S505 may be performed by a third network device and the terminal, and the third network device is different from the first network device. For example, after switching to the first cell, the terminal may perform S502' to S505'. In S502', the second network device sends a second message' to the terminal, where the second message' indicates to evaluate the handover condition of the second cell, and the second cell belongs to the third network device. In S503', the terminal evaluates the handover condition of the second cell in response to the second message'. In S504', the second network device sends a third message' to the third network device, where the third message' indicates that the terminal has been indicated to evaluate the handover condition of the second cell. In S505', the terminal switches to the second cell in response to evaluation of the handover condition of the second cell.

It may be understood that, in another embodiment, if the terminal receives no second message, the terminal may determine whether the handover condition corresponding to the conventional conditional handover is met. When the handover condition corresponding to the conventional conditional handover is met, the terminal may access the target cell through a RACH.

According to the foregoing method, after configuring the handover condition of the first cell for the terminal by using the first message, the first network device may indicate, by using the second message, the terminal to evaluate the handover condition of the first cell, and the terminal evaluates the handover condition of the first cell in response to the second message, and switches to the first cell when the evaluation result is determined as that the handover condition of the first cell is met. In comparison with the LTM handover procedure shown in FIG. 3, because the first network device may send the second message to the terminal in advance when signal quality of a source cell is good, after receiving the second message (for example, the switch command message), the terminal does not perform handover immediately, but evaluates the handover condition of the first cell, to avoid a problem that handover is affected because the switch command message fails to be sent due to a rapid change of the signal quality of the source cell, thereby improving handover robustness. In comparison with the conventional conditional handover procedure shown in FIG. 4, after the first network device configures the handover condition of the first cell for the terminal, the terminal does not immediately evaluate the handover condition of the first cell, but evaluates the handover condition of the first cell after receiving an indication from the network device, to help the network device manage and control the terminal, and avoid a problem of excessively large energy consumption or premature handover caused by premature evaluation of the terminal.

Optionally, the second message includes the TA information of the first cell, so that the terminal can access the first cell in a random access-less manner when the evaluation result is determined as that the handover condition of the first cell is met, to effectively reduce a handover delay and improve handover efficiency.

Optionally, the handover condition of the first cell corresponds to the TCI state, so that the terminal may evaluate the handover condition based on the corresponding TCI state, and when the evaluation result is that the handover condition is met, access the first cell based on the corresponding TCI state, to complete beam alignment in advance in a handover process, to reduce interruption of data transmission.

### Embodiment 2

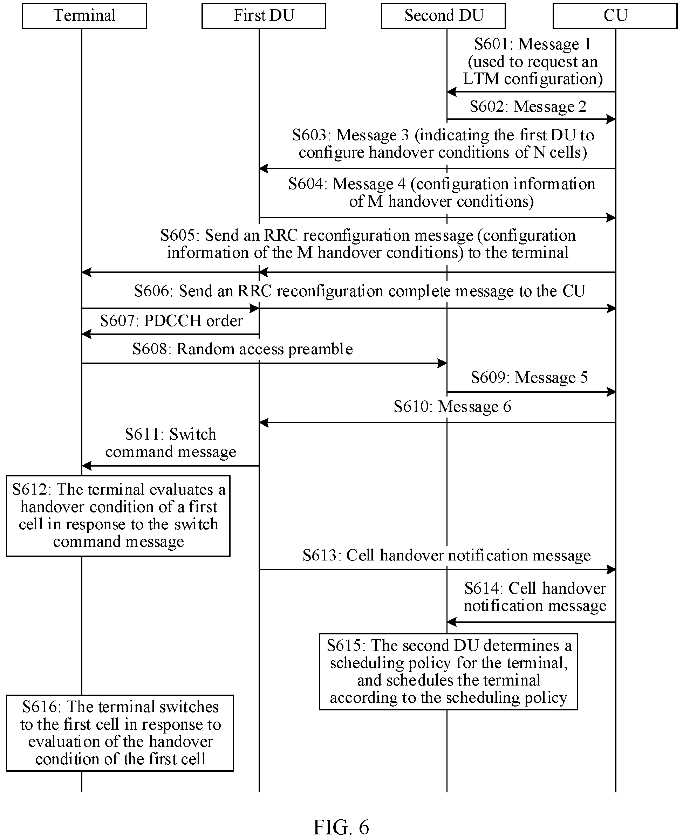

In Embodiment 2 (FIG. 6), a possible implementation procedure is described based on Embodiment 1 by using Scenario 2 as an example. That is, Embodiment 2 may be combined with Embodiment 1, and for specific implementations of related steps in Embodiment 2, refer to Embodiment 1.

**FIG. 6** is a schematic flowchart corresponding to a communication method according to Embodiment 2 of this application. As shown in FIG. 6, the method includes the following steps.

**S601**: A CU sends a message 1 to a second DU, where the message 1 is used to request an LTM configuration of a first cell.

Herein, there may be a plurality of trigger factors for sending the message 1 by the CU to the second DU. For example, a terminal sends a measurement report to a first DU. The measurement report includes a layer 3 measurement result, and may specifically include a measurement result of a neighboring cell. The neighboring cell is a cell to which the terminal may switch after the terminal moves. Further, the first DU sends the measurement report to the CU. For example, the first DU sends an uplink (uplink, UL) RRC message to the CU, where the UL RRC message includes the measurement report. Correspondingly, the CU may determine, based on the measurement report, whether to initiate the LTM configuration. If the CU determines to initiate the LTM configuration, the CU may send the message 1 to the second DU.

The message 1 may include first identifier information, and the first identifier information identifies the first DU. For example, the first identifier information corresponds to an ID of the first DU. The message 1 is further used to request an early synchronization configuration for the first identifier information, and the early synchronization configuration belongs to the configuration of the first cell.

**S602**: The second DU sends a message 2 to the CU, and correspondingly, the CU receives the message 2.

Herein, the message 2 includes configuration information A for early synchronization and/or configuration information B for early synchronization. Optionally, the message 2 further includes configuration information (such as a lower-layer RRC configuration and/or a reference signal configuration) of the first cell, CG resource information allocated by the second DU to the terminal for the first cell, and the like. The lower-layer RRC configuration may be a layer 1/layer 2 configuration, such as bearer configuration information and/or media access control configuration information.

The configuration information A for early synchronization is configuration information subsequently to be sent to the first DU, to help the first DU indicate, based on the configuration information A for early synchronization, the terminal to perform early synchronization. The configuration information B for early synchronization is configuration information subsequently to be sent to the terminal, to help the terminal perform early synchronization based on the configuration information B for early synchronization and an early synchronization indication of the first DU.

The configuration information A for early synchronization and the configuration information B for early synchronization may be the same, or may be different. For example, the configuration information A for early synchronization includes indexes of a plurality of preambles, and the configuration information B for early synchronization includes a root sequence of the preamble. In this way, the first DU may indicate an index of one (for example, a first preamble) of the preambles to the terminal, so that the terminal determines the first preamble based on a root sequence of the preamble and an index of the first preamble indicated by the first DU, and performs early synchronization by using the first preamble.

The message 2 further includes the first identifier information, and the configuration information A for early synchronization and/or the configuration information B for early synchronization correspond/corresponds to the first identifier information.

In addition, the message 1 may be a UE context setup request (UE context setup request) message, and the message 2 may be a UE context modification response (UE context modification response) message.

**S603**: The CU sends a message 3 (that is, a fifth message) to the first DU, and correspondingly, the first DU receives the message 3.

For example, the message 3 includes the configuration information A for early synchronization and identifier information corresponding to the first cell, and further includes other possible information, for example, the reference signal configuration of the first cell. The CU may send the message 3 to the first DU based on the first identifier information in the message 2.

Optionally, the message 3 includes indication information 1, and the indication information 1 indicates the first DU to configure handover conditions of N cells. For example, the indication information 1 includes identifier information corresponding to the N cells. Further, after receiving the message 3, the first DU may determine M handover conditions (and initial states of the M handover conditions) corresponding to the N cells. In this embodiment, "N=1, and the N cells are the first cell" is used as an example for description. When there are a plurality of cells, refer to the descriptions for the first cell.

**S604**: The first DU sends a message 4 to the CU, and correspondingly, the CU receives the message 4.

For example, the message 4 includes configuration information of the M handover conditions, and optionally, further includes initial state information of the M handover conditions.

The message 3 may be a UE context modification request (UE context modification request) message, and the message 4 may be a UE context modification response (UE context modification response) message.

**S605**: The CU sends an RRC reconfiguration message to the terminal, and correspondingly, the terminal receives the RRC reconfiguration message.

For example, the CU sends the RRC reconfiguration message to the terminal in a plurality of manners. For example, the CU sends a downlink (downlink, DL) RRC message to the first DU, where the DL RRC message includes the RRC reconfiguration message. Correspondingly, after receiving the DL RRC message, the first DU sends the RRC reconfiguration message to the terminal.

The RRC reconfiguration message may include the configuration information (for example, the lower-layer RRC configuration and/or the reference signal configuration) of the first cell and the configuration information of the M handover conditions, and optionally, further include the initial state information of the M handover conditions. In addition, the RRC reconfiguration message may further include other possible information, for example, the configuration information B for early synchronization. For content of the RRC reconfiguration message, refer to the descriptions of the first message in Embodiment 1.

**S606**: The terminal sends an RRC reconfiguration complete message to the CU, and correspondingly, the CU receives the RRC reconfiguration complete message.

Herein, after receiving the RRC reconfiguration message, the terminal may send a UL RRC message to the first DU, where the UL RRC message includes the RRC reconfiguration complete message. Further, the first DU may forward the RRC reconfiguration complete message to the CU.

**S607**: The first DU sends a PDCCH order to the terminal, where the PDCCH order indicates the terminal to send a random access preamble in the first cell, and correspondingly, the terminal receives the PDCCH order.

**S608**: The terminal sends the random access preamble in the first cell in response to the PDCCH order, and correspondingly, the second DU receives the random access preamble.

For example, the first DU may send the PDCCH order to the terminal based on the configuration information A for early synchronization. For example, the PDCCH order includes the index of the first preamble and a mask index (MASK index) corresponding to a first resource. Correspondingly, the terminal sends the random access preamble (that is, the first preamble) in the first cell to the second DU on the first resource based on the configuration information B for early synchronization with the first cell and the PDCCH order.

**S609**: The second DU determines TA information of the first cell based on the random access preamble, and sends a message 5 to the CU, and correspondingly, the CU receives the message 5.

For example, after receiving the first preamble on the first resource, the second DU may determine, based on the first preamble, the TA information of the first cell, determine that the first resource and the first preamble correspond to the first identifier information, and then send the message 5 to the CU. For example, the message 5 includes the TA information of the first cell, and random access resource information and the first identifier information that correspond to the TA information of the first cell. The random access resource information corresponding to the TA information of the first cell includes the index of the first preamble and a random access radio network temporary identifier (random access radio network temporary identifier, RA-RNTI) corresponding to the first resource.

**S610**: The CU sends a message 6 to the first DU based on the message 5, where the message 6 includes the TA information of the first cell and the random access resource information corresponding to the TA information of the first cell, and correspondingly, the first DU receives the message 6.

For example, the CU sends the message 6 to the first DU based on the first identifier information in the message 5. After receiving the message 6, the first DU may determine, based on the random access resource information corresponding to the TA information of the first cell, that the TA information of the first cell corresponds to the terminal.

It may be understood that the terminal may further perform downlink synchronization with the first cell. For example, the first DU sends a TCI state activation indicator for the first cell to the terminal, where the activation indicator is used to activate a TCI state of the first cell. The terminal tracks downlink timing of the first cell based on the activation indicator for the first cell.

**S611**: The first DU sends a switch command message (namely, a second message) to the terminal, where the second message indicates to evaluate a handover condition of the first cell, and correspondingly, the terminal receives the second message.

This embodiment is described by using an example in which the second message is the switch command message. For example, the second message includes second indication information (and first indication information), and further includes the TA information of the first cell. For another possible implementation, refer to the descriptions in Embodiment 1.

**S612**: The terminal evaluates the handover condition of the first cell in response to the switch command message.

Herein, for a specific implementation in which the terminal evaluates the handover condition of the first cell, refer to the descriptions in Embodiment 1.

**S613**: The first DU sends a cell handover notification message (namely, a third message a) to the CU, where the cell handover notification message indicates that the terminal has been indicated to evaluate the handover condition of the first cell, and correspondingly, the CU receives the cell handover notification message.

For example, the cell handover notification message further indicates a probability that the terminal switches to the first cell, and the cell handover notification message further indicates that the TA information of the first cell has been sent to the terminal.

**S614**: The CU sends a cell handover notification message (namely, a third message b) to the second DU, and correspondingly, the second DU receives the cell handover notification message.

**S615**: The second DU determines a scheduling policy for the terminal based on the cell handover notification message, and schedules the terminal according to the scheduling policy.

Herein, for a specific implementation of scheduling the terminal by the second DU, refer to the descriptions in Embodiment 1.

**S616**: The terminal switches to the first cell in response to evaluation of the handover condition of the first cell.

Herein, for a specific implementation in which the terminal switches to the first cell, refer to the descriptions in Embodiment 1.

### Embodiment 3

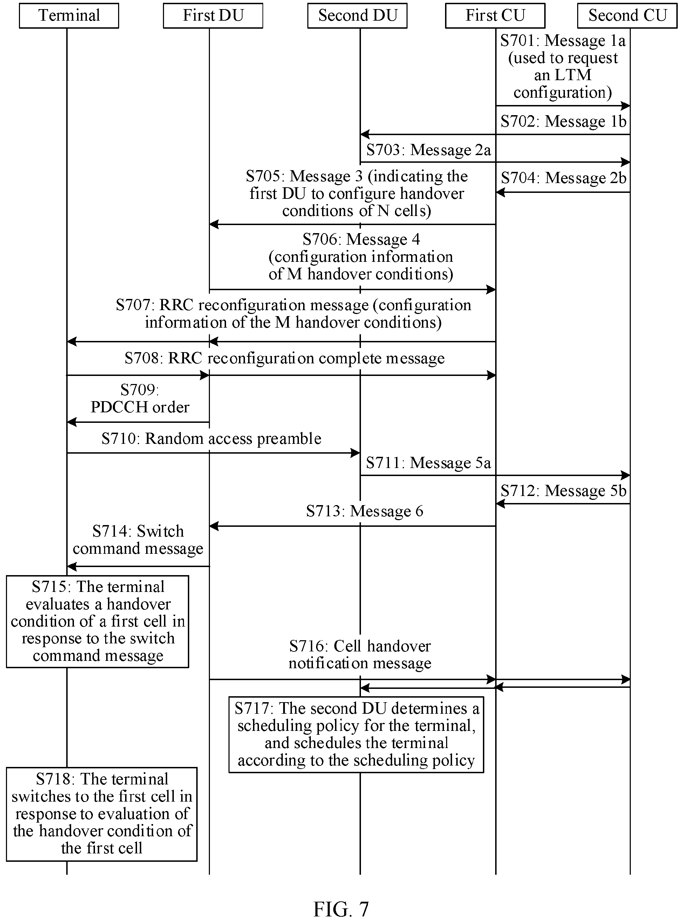

In Embodiment 3 (FIG. 7), a possible implementation procedure is described based on Embodiment 1 by using Scenario 3 as an example. That is, Embodiment 3 may be combined with Embodiment 1, and for specific implementations of related steps in Embodiment 3, refer to Embodiment 1.

**FIG. 7** is a schematic flowchart corresponding to a communication method according to Embodiment 3 of this application. As shown in FIG. 7, the method includes the following steps.

**S701**: A first CU sends a message 1a (that is, a sixth message) to a second CU, where the message 1a is used to request an LTM configuration of a first cell, and correspondingly, the second CU receives the message 1a.

Herein, there may be a plurality of trigger factors for the first CU to send the message 1a to the second CU. For example, a terminal sends a measurement report to a first DU. The measurement report includes a layer 3 measurement result, and may specifically include a measurement result of a neighboring cell. The neighboring cell is a cell to which the terminal may switch after the terminal moves. Further, the first DU sends the measurement report to the first CU. For example, the first DU sends a UL RRC message to the first CU, where the UL RRC message includes the measurement report. Correspondingly, the first CU may determine, based on the measurement report, whether to initiate the LTM configuration. If the first CU determines to initiate the LTM configuration, the first CU may send the message 1a to the second CU.

The message 1a may include first identifier information, and the first identifier information identifies the first DU. The message 1a is further used to request an early synchronization configuration for the first identifier information, and the early synchronization configuration belongs to the configuration of the first cell.

**S702**: The second CU sends a message 1b (that is, a seventh message) to a second DU, where the message 1b is used to request the LTM configuration of the first cell.

The message 1b includes the first identifier information and second identifier information, and the second identifier information identifies a source access network node (or a CU of the source access network node, that is, the first CU). For example, the second identifier information corresponds to an ID of the first CU. The message 1b is used to request an early synchronization configuration for the first identifier information and the second identifier information, and the early synchronization configuration belongs to the configuration of the first cell.

**S703**: The second DU sends a message 2a to the second CU, and correspondingly, the second CU receives the message 2a.

The message 2a includes configuration information A for early synchronization and/or configuration information B for early synchronization, the first identifier information, and the second identifier information. The message 2a may further include other possible information. For details, refer to the descriptions in Embodiment 2.

**S704**: The second CU sends a message 2b to the first CU, and correspondingly, the first CU receives the message 2b.

For example, the second CU sends the message 2b to the first CU based on the second identifier information in the message 2a. The message 2b includes the configuration information A for early synchronization and/or the configuration information B for early synchronization, and the first identifier information.

**S705**: The first CU sends a message 3 (that is, a fifth message) to the first DU, and correspondingly, the first DU receives the message 3.

For example, the message 3 includes the configuration information A for early synchronization and identifier information corresponding to the first cell, and further includes other possible information, for example, a reference signal configuration of the first cell. The first CU may send the message 3 to the first DU based on the first identifier information in the message 2.

Optionally, the message 3 includes indication information 1, and the indication information 1 indicates the first DU to configure handover conditions of N cells. Further, after receiving the message 3, the first DU may determine M handover conditions (and initial states of the M handover conditions) corresponding to the N cells. In this embodiment, "N=1, and the N cells are the first cell" is used as an example for description.

**S706**: The first DU sends a message 4 to the first CU, and correspondingly, the first CU receives the message 4.

For example, the message 4 includes configuration information of the M handover conditions, and optionally, further includes initial state information of the M handover conditions.

**S707**: The first CU sends an RRC reconfiguration message to the terminal, and correspondingly, the terminal receives the RRC reconfiguration message.

The RRC reconfiguration message may include configuration information (for example, a lower-layer RRC configuration and/or the reference signal configuration) of the first cell and the configuration information of the M handover conditions, and optionally, further include the initial state information of the M handover conditions. In addition, the RRC reconfiguration message may further include other possible information, for example, the configuration information B for early synchronization. For content of the RRC reconfiguration message, refer to the descriptions of the first message in Embodiment 1.

**S708**: The terminal sends an RRC reconfiguration complete message to the first CU, and correspondingly, the first CU receives the RRC reconfiguration complete message.

**S709**: The first DU sends a PDCCH order to the terminal, where the PDCCH order indicates the terminal to send a random access preamble in the first cell, and correspondingly, the terminal receives the PDCCH order.

**S710**: The terminal sends the random access preamble in the first cell in response to the PDCCH order, and correspondingly, the second DU receives the random access preamble.

For example, the first DU may send the PDCCH order to the terminal based on the configuration information A for early synchronization. For example, the PDCCH order includes an index of a first preamble and a mask index (MASK index) corresponding to a first resource. Correspondingly, the terminal sends the random access preamble (that is, the first preamble) in the first cell to the second DU on the first resource based on the configuration information B for early synchronization with the first cell and the PDCCH order.

**S711**: The second DU determines TA information of the first cell based on the random access preamble, and sends a message 5a to the second CU, and correspondingly, the second CU receives the message 5a.

For example, after receiving the first preamble on the first resource, the second DU may determine, based on the first preamble, the TA information of the first cell, determine that the first resource and the first preamble correspond to the first identifier information and the second identifier information, and then send the message 5a to the second CU. For example, the message 5a includes the TA information of the first cell, random access resource information corresponding to the TA information of the first cell, the first identifier information, and the second identifier information. The random access resource information corresponding to the TA information of the first cell includes the index of the first preamble and an RA-RNTI corresponding to the first resource.

**S712**: The second CU sends a message 5b to the first CU in response to the message 5a, and correspondingly, the first CU receives the message 5b.

Herein, the second CU may send the message 5b to the first CU based on the second identifier information in the message 5a. The message 5b includes the TA information of the first cell, the random access resource information corresponding to the TA information of the first cell, and the first identifier information.

**S713**: The first CU sends a message 6 to the first DU, where the message 6 includes the TA information of the first cell and the random access resource information corresponding to the TA information of the first cell, and correspondingly, the first DU receives the message 6.

For example, the first CU sends the message 6 to the first DU based on the first identifier information in the message 5b. After receiving the message 6, the first DU may determine, based on the random access resource information corresponding to the TA information of the first cell, that the TA information of the first cell corresponds to the terminal.

It may be understood that the terminal may further perform downlink synchronization with the first cell. For example, the first DU sends a TCI state activation indicator for the first cell to the terminal, where the activation indicator is used to activate a TCI state of the first cell. The terminal tracks downlink timing of the first cell based on the activation indicator for the first cell.

**S714**: The first DU sends a switch command message (namely, a second message) to the terminal, where the second message indicates to evaluate a handover condition of the first cell, and correspondingly, the terminal receives the second message.

This embodiment is described by using an example in which the second message is the switch command message. For example, the second message includes second indication information (and first indication information), and further includes the TA information of the first cell. For another possible implementation, refer to the descriptions in Embodiment 1.

**S715**: The terminal evaluates the handover condition of the first cell in response to the switch command message.

**S716**: The first DU sends a cell handover notification message (namely, a third message) to the second DU via the first CU and the second CU, where the cell handover notification message indicates that the terminal has been indicated to evaluate the handover condition of the first cell, and correspondingly, the second DU receives the cell handover notification message.

For example, the cell handover notification message further indicates a probability that the terminal switches to the first cell, and the cell handover notification message further indicates that the TA information of the first cell has been sent to the terminal.

**S717**: The second DU determines a scheduling policy for the terminal in response to the cell handover notification message, and schedules the terminal according to the scheduling policy.

Herein, for a specific implementation of scheduling the terminal by the second DU, refer to the descriptions in Embodiment 1.

**S718**: The terminal switches to the first cell in response to evaluation of the handover condition of the first cell.

It may be understood that the foregoing Embodiment 2 and Embodiment 3 are described by using Scenario 2 and Scenario 3 as examples respectively. For other handover scenarios (for example, Scenario 1, Scenario 4, and Scenario 5), refer to the descriptions in Embodiment 2 and Embodiment 3. When embodiments of this application are applicable to different handover scenarios, message names may be different. The message names are not limited in embodiments of this application.

### Embodiment 4

In Embodiment 4, a possible implementation procedure of LTM handover is described by using Scenario 3 as an example.

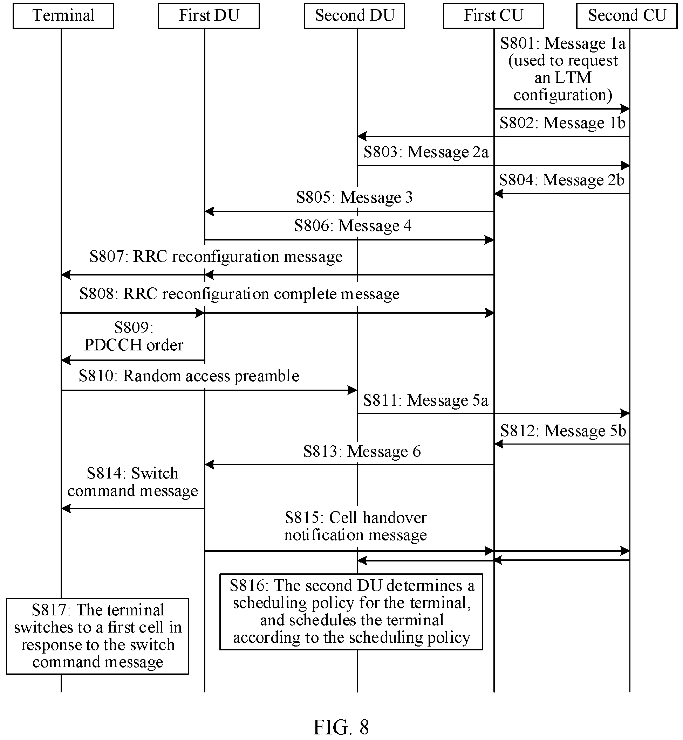

**FIG. 8** is a schematic flowchart corresponding to a communication method according to Embodiment 4 of this application. As shown in FIG. 8, the method includes the following steps.

**S801**: A first CU sends a message 1a to a second CU, where the message 1a is used to request an LTM configuration of a first cell, and correspondingly, the second CU receives the message 1a.

The message 1a may include first identifier information, and the first identifier information identifies a first DU. The message 1a is further used to request an early synchronization configuration for the first identifier information, and the early synchronization configuration belongs to the configuration of the first cell.

**S802**: The second CU sends a message 1b to a second DU, where the message 1b is used to request the LTM configuration of the first cell.

The message 1b includes the first identifier information and second identifier information, and the second identifier information identifies a source access network node (or a CU of the source access network node, that is, the first CU). The message 1b is used to request an early synchronization configuration for the first identifier information and the second identifier information, and the early synchronization configuration belongs to the configuration of the first cell.

**S803**: The second DU sends a message 2a to the second CU, and correspondingly, the second CU receives the message 2a.

The message 2a includes configuration information A for early synchronization and/or configuration information B for early synchronization, the first identifier information, and the second identifier information. The message 2a may further include other possible information. For details, refer to the descriptions in Embodiment 2.

**S804**: The second CU sends a message 2b to the first CU, and correspondingly, the first CU receives the message 2b.

For example, the second CU sends the message 2b to the first CU based on the second identifier information in the message 2a. The message 2b includes the configuration information A for early synchronization and/or the configuration information B for early synchronization, and the first identifier information.

**S805**: The first CU sends a message 3 (that is, a fifth message) to the first DU, and correspondingly, the first DU receives the message 3.

For example, the message 3 further includes the configuration information A for early synchronization, and further includes other possible information, for example, a reference signal configuration of the first cell. The first CU may send the message 3 to the first DU based on the first identifier information in the message 2.

**S806**: The first DU sends a message 4 to the first CU, and correspondingly, the first CU receives the message 4.

For example, the message 4 may include a channel state information (channel state information, CSI) resource configuration of a source cell, and the CSI resource configuration is used by the terminal to send a lower-layer measurement result (for example, a layer 1/layer 2 measurement result) of a candidate cell (for example, the first cell) in the source cell.

**S807**: The first CU sends an RRC reconfiguration message to the terminal, and correspondingly, the terminal receives the RRC reconfiguration message.

The RRC reconfiguration message may include the configuration information B for early synchronization, and a lower-layer RRC configuration and the reference signal configuration of the first cell. Optionally, the RRC reconfiguration message further includes CG resource information allocated by the second DU to the terminal for the first cell, and the like.

**S808**: The terminal sends an RRC reconfiguration complete message to the first CU, and correspondingly, the first CU receives the RRC reconfiguration complete message.

**S809**: The first DU sends a PDCCH order to the terminal, where the PDCCH order indicates the terminal to send a random access preamble in the first cell, and correspondingly, the terminal receives the PDCCH order.

**S810**: The terminal sends the random access preamble in the first cell in response to the PDCCH order, and correspondingly, the second DU receives the random access preamble.

For example, the first DU may send the PDCCH order to the terminal based on the configuration information A for early synchronization. For example, the PDCCH order includes an index of a first preamble and a mask index (MASK index) corresponding to a first resource. Correspondingly, the terminal sends the random access preamble (that is, the first preamble) in the first cell to the second DU on the first resource based on the configuration information B for early synchronization with the first cell and the PDCCH order.

**S811**: The second DU determines TA information of the first cell based on the random access preamble, and sends a message 5a to the second CU, and correspondingly, the second CU receives the message 5a.

For example, after receiving the first preamble on the first resource, the second DU may determine, based on the first preamble, the TA information of the first cell, determine that the first resource and the first preamble correspond to the first identifier information and the second identifier information, and then send the message 5a to the second CU. For example, the message 5a includes the TA information of the first cell, random access resource information corresponding to the TA information of the first cell, the first identifier information, and the second identifier information. The random access resource information corresponding to the TA information of the first cell includes the index of the first preamble and an RA-RNTI corresponding to the first resource.

**S812**: The second CU sends a message 5b to the first CU in response to the message 5a, and correspondingly, the first CU receives the message 5b.

Herein, the second CU may send the message 5b to the first CU based on the second identifier information in the message 5a. The message 5b includes the TA information of the first cell, the random access resource information corresponding to the TA information of the first cell, and the first identifier information.

**S813**: The first CU sends a message 6 to the first DU, where the message 6 includes the TA information of the first cell and the random access resource information corresponding to the TA information of the first cell, and correspondingly, the first DU receives the message 6.

For example, the first CU sends the message 6 to the first DU based on the first identifier information in the message 5b. After receiving the message 6, the first DU may determine, based on the random access resource information corresponding to the TA information of the first cell, that the TA information of the first cell corresponds to the terminal.

It may be understood that the terminal may further perform downlink synchronization with the first cell. For example, the first DU sends a TCI state activation indicator for the first cell to the terminal, where the activation indicator is used to activate a TCI state of the first cell. The terminal tracks downlink timing of the first cell based on the activation indicator for the first cell.

**S814**: The first DU sends a switch command message to the terminal, where the switch command message indicates the terminal to switch to the first cell, and correspondingly, the terminal receives the switch command message.

For example, the terminal reports the lower-layer measurement result of the first cell to the first DU. If the first DU determines, based on the lower-layer measurement result of the first cell reported by the terminal, to switch the terminal to the first cell, the first DU sends the switch command message to the terminal, where the switch command message includes the TA information of the first cell and identifier information (for example, a configuration identifier of the first cell) corresponding to the first cell.

**S815**: The first DU sends a cell handover notification message to the second DU via the first CU and the second CU, where the cell handover notification message indicates that the terminal has been indicated to switch to the first cell, and correspondingly, the second DU receives the cell handover notification message.

For example, the cell handover notification message includes the identifier information corresponding to the first cell (for example, a CGI of the first cell), and optionally, further includes active TCI state information of the first cell.

**S816**: The second DU determines a scheduling policy for the terminal in response to the cell handover notification message, and schedules the terminal according to the scheduling policy.

For example, after receiving the cell handover notification message, the second DU may learn that the terminal is to switch to the first cell, and may determine the scheduling policy for the terminal. For example, for a CG resource for the terminal, the second DU may attempt to receive data of the terminal on the CG resource, and does not allocate the CG resource for the terminal to another terminal; and/or the second DU starts to use a DG to schedule the terminal to perform uplink data transmission.

**S817**: The terminal switches to the first cell in response to the switch command message.

Herein, the terminal may access the first cell in a random access-less manner based on the TA information of the first cell, that is, access the target cell through a CG PUSCH or a DG PUSCH, to complete the handover, instead of accessing the first cell through an RACH.

It may be understood that Embodiment 4 is described by using Scenario 3 as an example. For another handover scenario (for example, Scenario 4 or Scenario 5), refer to the descriptions in Embodiment 4. When embodiments of this application are applicable to different handover scenarios, message names may be different. For example, in Scenario 4, names of messages exchanged between different network devices may be a handover request (handover request) message and a handover request acknowledgment (handover request acknowledge) message. The message names are not limited in embodiments of this application. In addition, the foregoing Embodiment 4 focuses on a procedure difference between Embodiment 4 and Embodiment 3. For other content except the difference, and for specific implementations of related steps in Embodiment 4, refer to Embodiment 3.

### Embodiment 5

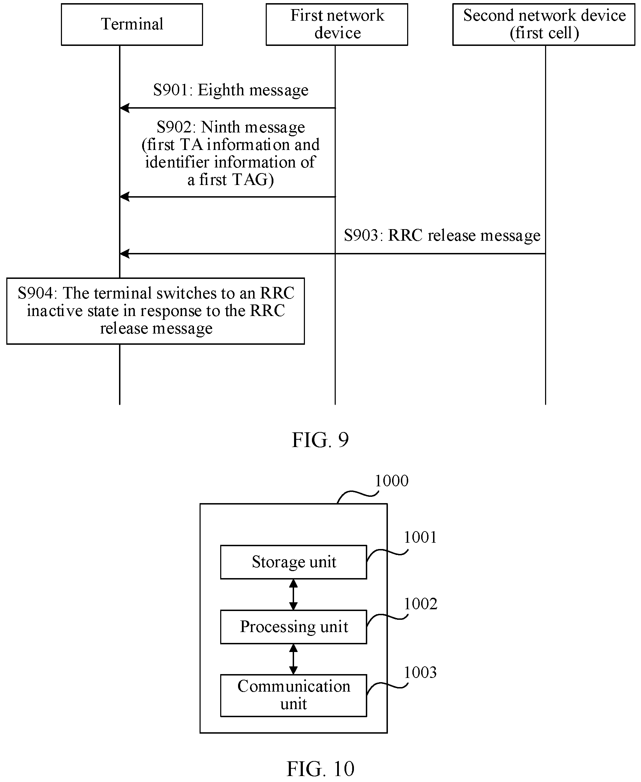

**FIG. 9** is a schematic flowchart corresponding to a communication method according to Embodiment 5 of this application. As shown in FIG. 9, the method includes the following steps.

**S901**: A first network device sends an eighth message to a terminal, where the terminal is in an RRC connected state, and correspondingly, the terminal receives the eighth message.

For example, the eighth message is an RRC message, for example, an RRC reconfiguration message. The eighth message includes a configuration of a first TCI state and a configuration of a second TCI state, and further includes identifier information of a timing advance group (timing advance group, TAG) associated with the first TCI state (that is, identifier information of a first TAG) and identifier information of a TAG associated with the second TCI state (that is, identifier information of a second TAG). The first TCI state and the second TCI state belong to a same cell, the first TCI state and the second TCI state may be associated with different control resource set (control resource set, CORESET) pools (CORESET Pools), the first TCI state is different from the second TCI state, and the first TAG is different from the second TAG.

The cell to which the first TCI state and the second TCI state belong may be a serving cell of the terminal. In this case, the first network device and a second network device in the following are a same access network node (that is, a serving access network node of the terminal). Alternatively, the cell to which the first TCI state and the second TCI state belong may be a candidate cell (for example, a first cell) of the terminal. In this case, the first network device is a source access network node of the terminal, the second network device is a candidate access network node of the terminal, and the first cell is a cell managed by the second network device. In this embodiment, an example in which the cell to which the first TCI state and the second TCI state belong is the first cell is used for description.

In a possible implementation, the eighth message and the first message in Embodiment 1 are a same message. In other words, the eighth message may further include other possible information, for example, configuration information of M handover conditions. For details, refer to the descriptions in Embodiment 1.

**S902**: The first network device sends a ninth message to the terminal device, and correspondingly, the terminal receives the ninth message.

For example, the ninth message includes a TA command of the first TAG, and the TA command of the first TAG includes first TA information and information that indicates the first TAG. For a specific implementation in which the first network device obtains the first TA information, refer to the descriptions in Embodiment 1.

Optionally, the ninth message further includes a TA command of the second TAG, and the TA command of the second TAG includes second TA information and information that indicates the second TAG.

Specifically, the ninth message includes a field, and different values of the field correspond to different TAGs. For example, "1" indicates the first TAG, and "0" indicates the second TAG. A correspondence between different values and TAGs is indicated to the terminal in the eighth message.

In a possible implementation, the ninth message and the switch command message in Embodiment 1 may be a same message. For example, the TA information of the first cell in Embodiment 1 may include the first TA information (and the second TA information).

**S903**: The second network device sends an RRC release message to the terminal, where the RRC release message indicates the terminal to transit from the RRC connected state to an RRC inactive state (RRC inactive state).

For example, the RRC release message includes a transmission configuration, and the transmission configuration is associated with the identifier information of the first TAG.

In the RRC inactive state, the terminal maintains the configuration of the first TCI state and the configuration of the second TCI state, the identifier information of the TAG associated with the first TCI state (that is, the identifier information of the first TAG), and the identifier information of the TAG associated with the second TCI state (that is, the identifier information of the second TAG).

In a possible implementation, the second network device may determine, from TA information of a plurality of TAGs associated with the first cell (for example, the TA information of the first TAG and the TA information of the second TAG), a specific TAG whose TA information is used for transmission in the RRC inactive state, and indicate the TAG to the terminal by using the RRC release message. In this case, the RRC release message further includes identifier information of a TAG corresponding to the transmission configuration (that is, the identifier information of the first TAG).

In another possible implementation, the RRC release message does not include identifier information of a TAG corresponding to the transmission configuration, and the terminal determines, as defined in a protocol, that the transmission configuration corresponds to the first TAG. For example, it is defined in the protocol that the transmission configuration corresponds to a TAG with minimum or maximum identifier information, or the transmission configuration corresponds to a TAG corresponding to a timing advance timer (timing advance timer, TAT) that is running when the RRC release message is received. For example, when the terminal receives the RRC release message, if a TAT corresponding to the first TAG is running, and a TAT corresponding to the second TAG is not running, the terminal may determine that the transmission configuration corresponds to the first TAG.

The transmission configuration may be a configured grant small data transmission (configured grant small data transmission, CG-SDT) configuration or a sounding reference signal (sounding reference signal, SRS) configuration in the RRC inactive state. For example, the CG-SDT configuration includes time-frequency resource information of CG-SDT, and the SRS configuration in the RRC inactive state includes time-frequency resource information of an SRS. The time-frequency resource of the CG-SDT is used by the terminal in the RRC inactive state to send uplink data to the second network device. The time-frequency resource of the SRS is used by the terminal in the RRC inactive state to send the SRS to the second network device.

Optionally, before S903, the terminal may switch from a source cell to the first cell (for example, switch to the first cell in the manner described in Embodiment 1), or the terminal accesses the first cell in another possible manner. Specific implementations are not limited.

**S904**: The terminal switches to the RRC inactive state in response to the RRC release message.

For example, the terminal may communicate with the second network device in the RRC inactive state by using the TA information of the first TAG (namely, the first TA information). For example, the terminal sends CG-SDT data to the second network device based on the CG-SDT configuration and the first TA information. For another example, the terminal sends an inactive SRS to the second network device based on the SRS configuration in the RRC inactive state and the first TA information.

Optionally, the terminal may determine, based on the TCI state associated with the first TAG, whether the first TA information is valid. For example, for the first TCI state associated with the first TAG, the terminal may receive and measure a signal (an SSB or a CSI-RS) associated with the first TCI state, and determine, based on a signal quality change amount obtained through measurement, whether the first TA information is valid. For example, if current signal quality minus previous signal quality is less than or equal to a threshold, it is determined that the first TA information is valid; or if current signal quality minus previous signal quality is greater than a threshold, it is determined that the first TA information is invalid. The terminal does not determine, based on the TCI state associated with the second TAG, whether a first TA is valid.

In addition, Embodiment 5 may be implemented independently, or Embodiment 5 may be implemented in combination with Embodiment 1 or another embodiment.

For the foregoing plurality of embodiments, it may be understood that:
(1) In any embodiment of the present invention, "performing B (behavior) in response to A (message)" may be understood as "performing B based on A", or may be understood as "performing B because of A".
(2) In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. In addition, in a same embodiment, different implementations or different examples may reference or refer to each other.
(3) Various numerals in this application are for differentiation merely for ease of description, but are not for limiting the scope of this application. Step numbers in the foregoing flowcharts are merely examples of execution procedures, and do not constitute a limitation on an execution sequence of the steps. In other words, the step numbers do not mean the execution sequence, and the execution sequence of each step should be determined based on a function and internal logic of the step. In addition, not all steps shown in each flowchart are mandatory, and some steps may be added or deleted for each flowchart based on an actual requirement.

The solutions provided in embodiments of this application are mainly described above from a perspective of interaction between the network side apparatus and the terminal side apparatus. It may be understood that, to implement the foregoing functions, the network side apparatus and the terminal side apparatus may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network side apparatus and the terminal side apparatus based on the foregoing method examples. For example, division into each functional unit may be based on each corresponding function, or two or more functions may be integrated into one unit. The integrated unit may be implemented in a form of hardware, or may be implemented in a form of a software functional unit.

When an integrated unit is used, FIG. 10 is a possible example block diagram of an apparatus according to an embodiment of this application. As shown in FIG. 10, an apparatus 1000 may include a processing unit 1002 and a communication unit 1003. The processing unit 1002 is configured to control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.
(1) The apparatus 1000 may be the terminal side apparatus (for example, the terminal) in the foregoing embodiments. The processing unit 1002 may support the apparatus 1000 in performing actions of the terminal in the foregoing method examples. Alternatively, the processing unit 1002 mainly performs internal actions of the terminal in the method examples, and the communication unit 1003 may support communication between the apparatus 1000 and another device.

For example, in an embodiment, the communication unit 1003 is configured to receive a first message from a first network side apparatus, where the first message is used to configure M handover conditions; receive a second message from the first network side apparatus, where the second message indicates to evaluate a handover condition of a first cell, the M handover conditions include the handover condition of the first cell, and M is an integer greater than or equal to 1; and the processing unit 1002 is configured to evaluate the handover condition of the first cell in response to the second message.

In a possible design, the second message includes identifier information corresponding to the first cell, and/or identifier information of the handover condition of the first cell.

In a possible design, the M handover conditions correspond to N cells, the N cells include the first cell, N is less than or equal to M, and N is an integer greater than or equal to 1.

In a possible design, the first message further indicates not to evaluate the handover condition of the first cell.

In a possible design, the second message includes first indication information, and the first indication information indicates conditional handover; and the second message further includes second indication information, and the second indication information indicates to evaluate the handover condition of the first cell in a case of the conditional handover.

In a possible design, the processing unit 1002 is further configured to switch to the first cell in response to evaluation of the handover condition of the first cell.

In a possible design, the processing unit 1002 is specifically configured to: when an evaluation result is determined as that the handover condition of the first cell is met, switch to the first cell.

In a possible design, the handover condition of the first cell includes K handover conditions, where K is an integer greater than or equal to 1; and that the handover condition of the first cell is met includes: one of the K handover conditions of the first cell is met.

In a possible design, the K handover conditions include a first handover condition and a second handover condition; and a type of the first handover condition is different from a type of the second handover condition; when the type of the first handover condition is the same as the type of the second handover condition, thresholds corresponding to the first handover condition and the second handover condition are different; or the first handover condition starts to be evaluated after the first message is received, and the second handover condition starts to be evaluated after the second message is received.

In a possible design, that the handover condition of the first cell is met includes at least one of the following: Signal quality of a source cell is less than or equal to a first threshold; signal quality of the first cell is greater than or equal to a second threshold; and a difference between the signal quality of the first cell and the signal quality of the source cell is greater than or equal to a third threshold.

In a possible design, the handover condition of the first cell corresponds to a first transmission configuration indicator TCI state; and the processing unit 1002 is specifically configured to access the first cell based on the first TCI state corresponding to the handover condition of the first cell.

In a possible design, the first message or the second message further indicates that the handover condition of the first cell corresponds to the first TCI state.

In a possible design, the processing unit 1002 is specifically configured to access the first cell in a random access-less manner.

In a possible design, the second message includes timing advance TA information of the first cell; or the method further includes: receiving the TA information of the first cell after the second message, where the TA information of the first cell is used to access the first cell in a random access-less manner.

In a possible design, after switching to the first cell, the processing unit 1002 is further configured to cancel conditional handover that meets a handover condition of another cell.

(2) The apparatus 1000 may be the first network side apparatus (for example, the first network device) in the foregoing embodiments. The processing unit 1002 may support the apparatus 1000 in performing actions of the first network device in the foregoing method examples. Alternatively, the processing unit 1002 mainly performs internal actions of the first network device in the method examples, and the communication unit 1003 may support communication between the apparatus 1000 and another device.

For example, in an embodiment, the communication unit 1003 is configured to: send a first message to a terminal side apparatus, where the first message is used to configure M handover conditions; and send a second message to the terminal side apparatus, where the second message indicates the terminal side apparatus to evaluate a handover condition of a first cell, the M handover conditions include the handover condition of the first cell, and M is an integer greater than or equal to 1.

In a possible design, the communication unit 1003 is further configured to send a third message, where the third message indicates that the terminal side apparatus has been indicated to evaluate the handover condition of the first cell.

In a possible design, the communication unit 1003 is further configured to send a fourth message, where the fourth message indicates that the TA information of the first cell has been sent to the terminal side apparatus.

In a possible design, the third message further indicates a probability that the terminal side apparatus switches to the first cell.

In a possible design, the M handover conditions correspond to N cells, the N cells include the first cell, N is less than or equal to M, and N is an integer greater than or equal to 1.

In a possible design, the communication unit 1003 is further configured to receive a fifth message, where the fifth message is used to request to configure handover conditions of the N cells.

In a possible design, the second message includes identifier information corresponding to the first cell, and/or identifier information of the handover condition of the first cell.

In a possible design, the first message further indicates the terminal side apparatus not to evaluate the handover condition of the first cell.

In a possible design, the second message includes first indication information, and the first indication information indicates conditional handover; and the second message further includes second indication information, and the second indication information indicates to evaluate the handover condition of the first cell in a case of the conditional handover.

In a possible design, the first message or the second message further indicates that the condition of the first cell corresponds to a first TCI state.

In a possible design, the second message includes TA information of the first cell; or the method further includes: sending the TA information of the first cell to the terminal side apparatus after the second message, where the TA information of the first cell is used to access the first cell in a random access-less manner.

In a possible design, the handover condition of the first cell includes K handover conditions, where K is an integer greater than or equal to 1, and the K handover conditions include a first handover condition and a second handover condition; and a type of the first handover condition is different from a type of the second handover condition; when the type of the first handover condition is the same as the type of the second handover condition, thresholds corresponding to the first handover condition and the second handover condition are different; or the first handover condition starts to be evaluated after the first message is received, and the second handover condition starts to be evaluated after the second message is received.

It should be understood that division into the units in the apparatus is merely logical function division. In actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

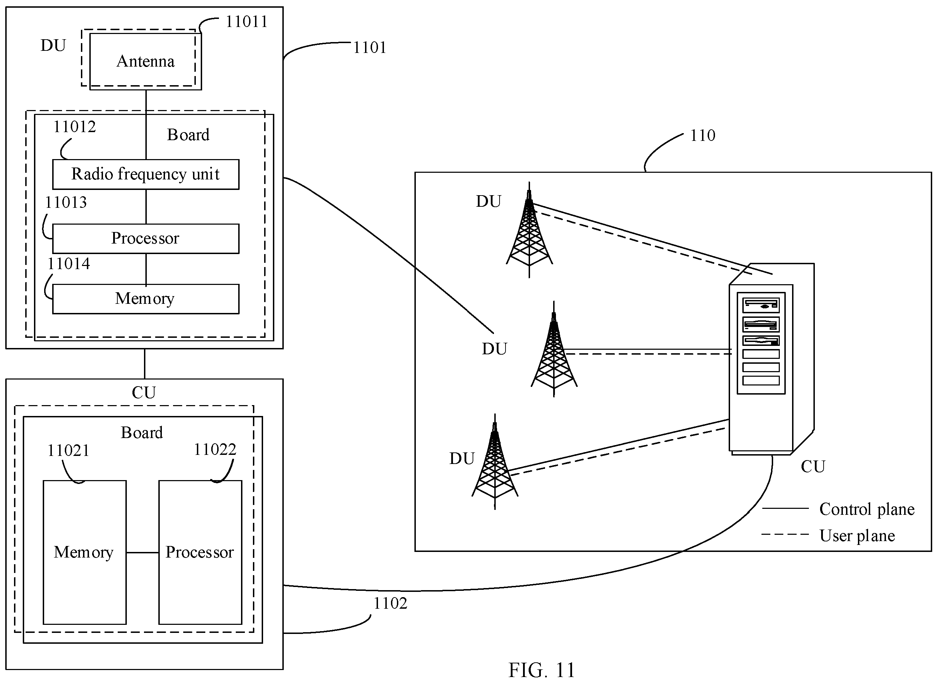

FIG. 11 is a diagram of a structure of a network side apparatus (for example, a network device) according to an embodiment of this application. The network device may be used in the communication system shown in FIG. 1, to perform functions of the network device in the foregoing method embodiments. As shown in FIG. 11, the network device 110 may be an access network node, and the network device 110 may include one or more DUs 1101 and one or more CUs 1102. The DU 1101 may include at least one antenna 11011, at least one radio frequency unit 11012, at least one processor 11013, and at least one memory 11014. The DU 1101 is mainly configured to receive and send a radio frequency signal, perform conversion between a radio frequency signal and a baseband signal, and perform partial baseband processing. The CU 1102 may include at least one processor 11022 and at least one memory 11021.

The CU 1102 is mainly configured to perform baseband processing, control the network device, and the like. The DU 1101 and the CU 1102 may be physically disposed together, or may be physically disposed separately, that is, a distributed base station. The CU 1102 is a control center of the network device, may also be referred to as a processing unit, and is mainly configured to complete a baseband processing function. For example, the CU 1102 may be configured to control the network device to perform an operation procedure related to the network device in the foregoing method embodiments.

In addition, optionally, the network device 110 may include one or more radio frequency units, one or more DUs, and one or more CUs. The DU may include at least one processor 11013 and at least one memory 11014, the radio frequency unit may include at least one antenna 11011 and at least one radio frequency unit 11012, and the CU may include at least one processor 11022 and at least one memory 11021.

In an example, the CU 1102 may include one or more boards. A plurality of boards may jointly support a radio access network (for example, a 5G network) with a single access indication, or may separately support radio access networks (for example, an LTE network, a 5G network, or another network) with different access standards. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board. In an example, the DU 1101 may include one or more boards. A plurality of boards may jointly support a radio access network (for example, a 5G network) with a single access indication, or may separately support radio access networks (for example, an LTE network, a 5G network, or another network) with different access standards. The memory 11014 and the processor 11013 may serve one or more boards. In other words, a memory and a processor may be disposed on each board. Alternatively, a plurality of boards may share a same memory and a same processor. In addition, a necessary circuit may further be disposed on each board.

The network device shown in FIG. 11 can implement all processes related to the network device in the foregoing method embodiments. Operations and/or functions of the modules in the network device shown in FIG. 11 are respectively intended to implement the corresponding procedures in the foregoing method embodiments. For details, refer to the descriptions in the foregoing method embodiments. To avoid repetition, detailed descriptions are properly omitted herein.

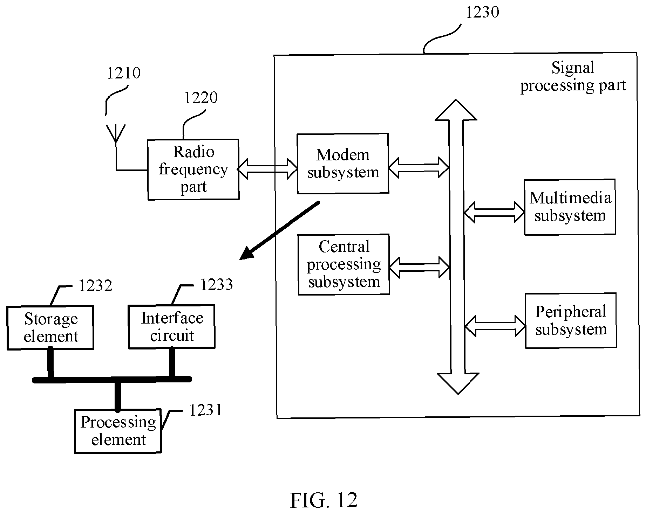

FIG. 12 is a diagram of a structure of a terminal side apparatus (for example, a terminal) according to an embodiment of this application. The terminal may be used in the communication system shown in FIG. 1, to implement operations of the terminal in the foregoing embodiments. As shown in FIG. 12, the terminal includes an antenna 1210, a radio frequency part 1220, and a signal processing part 1230. The antenna 1210 is connected to the radio frequency part 1220. In a downlink direction, the radio frequency part 1220 receives, through the antenna 1210, information sent by a network device, and sends, to the signal processing part 1230 for processing, the information sent by the network device. In an uplink direction, the signal processing part 1230 processes information of the terminal and sends processed information to the radio frequency part 1220, and the radio frequency part 1220 processes the information of the terminal and then sends processed information to the network device through the antenna 1210.

The signal processing part 1230 may include a modem subsystem, configured to implement processing of data at each communication protocol layer. The signal processing part 1230 may further include a central processing subsystem, configured to implement processing of an operating system and an application layer of the terminal. In addition, the signal processing part 1230 may further include another subsystem, for example, a multimedia subsystem or a peripheral subsystem. The multimedia subsystem is configured to implement control of a camera, a screen display, or the like of the terminal, and the peripheral subsystem is configured to implement a connection to another device. The modem subsystem may be a separately disposed chip.

The modem subsystem may include one or more processing elements 1231, for example, include a main control CPU and another integrated circuit. In addition, the modem subsystem may further include a storage element 1232 and an interface circuit 1233. The storage element 1232 is configured to store data and a program. However, a program used to perform the method performed by the terminal in the foregoing methods may not be stored in the storage element 1232, but is stored in a memory outside the modem subsystem, and is loaded and used by the modem subsystem when to be used. The interface circuit 1233 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processing element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 10. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of these forms of integrated circuits. The storage element may be implemented by using a memory, and a function of the storage element may be the same as a function of the storage unit described in FIG. 10. The storage element may be a memory, or may be a collective name of a plurality of memories.

The terminal shown in FIG. 12 can implement processes related to the terminal in the foregoing method embodiments. Operations and/or functions of modules in the terminal shown in FIG. 12 are respectively intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method comprises:
receiving a first message from a network side apparatus, wherein the first message is used to configure M handover conditions;
receiving a second message from the network side apparatus, wherein the second message indicates to evaluate a handover condition of a first cell, the M handover conditions comprise the handover condition of the first cell, and M is an integer greater than or equal to 1; and
evaluating the handover condition of the first cell in response to the second message.

2. The method according to claim 1, wherein the second message comprises:
identifier information corresponding to the first cell, and/or identifier information of the handover condition of the first cell.

3. The method according to claim 1 or 2, wherein the M handover conditions correspond to N cells, the N cells comprise the first cell, N is less than or equal to M, and N is an integer greater than or equal to 1.

4. The method according to any one of claims 1 to 3, wherein the first message further indicates not to evaluate the handover condition of the first cell.

5. The method according to any one of claims 1 to 4, wherein the method further comprises:
switching to the first cell in response to evaluation of the handover condition of the first cell.

6. The method according to claim 5, wherein switching to the first cell in response to the evaluation of the handover condition of the first cell comprises:
when an evaluation result is determined as that the handover condition of the first cell is met, switching to the first cell.

7. The method according to claim 6, wherein the handover condition of the first cell comprises K handover conditions, and K is an integer greater than or equal to 1; and
that the handover condition of the first cell is met comprises that one of the K handover conditions of the first cell is met.

8. The method according to claim 7, wherein the K handover conditions comprise a first handover condition and a second handover condition; and
a type of the first handover condition is different from a type of the second handover condition;
when the type of the first handover condition is the same as the type of the second handover condition, thresholds corresponding to the first handover condition and the second handover condition are different; or
the first handover condition starts to be evaluated after the first message is received, and the second handover condition starts to be evaluated after the second message is received.

9. The method according to any one of claims 6 to 8, wherein that the handover condition of the first cell is met comprises at least one of the following:
signal quality of a source cell is less than or equal to a first threshold;
signal quality of the first cell is greater than or equal to a second threshold; or
a difference between the signal quality of the first cell and the signal quality of the source cell is greater than or equal to a third threshold.

10. The method according to any one of claims 5 to 9, wherein the handover condition of the first cell corresponds to a first transmission configuration indicator TCI state; and
switching to the first cell comprises: accessing the first cell based on the first TCI state corresponding to the handover condition of the first cell.

11. The method according to any one of claims 5 to 10, wherein switching to the first cell comprises: accessing the first cell in a random access-less manner.

12. The method according to claim 11, wherein the second message comprises timing advance TA information of the first cell; or the method further comprises: receiving the TA information of the first cell after the second message, wherein
the TA information of the first cell is used to access the first cell in a random access-less manner.

13. The method according to any one of claims 5 to 12, wherein after switching to the first cell, the method further comprises:
canceling conditional handover that meets a handover condition of another cell.

14. A communication method, wherein the method comprises:
sending a first message to a terminal side apparatus, wherein the first message is used to configure M handover conditions; and
sending a second message to the terminal side apparatus, wherein the second message indicates the terminal side apparatus to evaluate a handover condition of a first cell, the M handover conditions comprise the handover condition of the first cell, and M is an integer greater than or equal to 1.

15. The method according to claim 14, wherein the method further comprises:
sending a third message, wherein the third message indicates that the terminal side apparatus has been indicated to evaluate the handover condition of the first cell.

16. The method according to claim 15, wherein the method further comprises:
sending a fourth message, wherein the fourth message indicates that TA information of the first cell has been sent to the terminal side apparatus.

17. The method according to claim 15 or 16, wherein the third message further indicates a probability that the terminal side apparatus switches to the first cell.

18. The method according to any one of claims 14 to 17, wherein the M handover conditions correspond to N cells, the N cells comprise the first cell, N is less than or equal to M, and N is an integer greater than or equal to 1.

19. The method according to claim 18, wherein the method further comprises:
receiving a fifth message, wherein the fifth message is used to request to configure handover conditions of the N cells.

20. The method according to any one of claims 14 to 19, wherein the second message comprises:
identifier information corresponding to the first cell, and/or identifier information of the handover condition of the first cell.

21. The method according to any one of claims 14 to 20, wherein the first message further indicates the terminal side apparatus not to evaluate the handover condition of the first cell.

22. The method according to any one of claims 14 to 21, wherein the first message or the second message further indicates that the condition of the first cell corresponds to a first TCI state.

23. The method according to any one of claims 14 to 22, wherein the second message comprises the TA information of the first cell; or the method further comprises: sending the TA information of the first cell to the terminal side apparatus after the second message, wherein
the TA information of the first cell is used by the terminal side apparatus to access the first cell in a random access-less manner.

24. The method according to any one of claims 14 to 23, wherein the handover condition of the first cell comprises K handover conditions, K is an integer greater than or equal to 1, and the K handover conditions comprise a first handover condition and a second handover condition; and
a type of the first handover condition is different from a type of the second handover condition;
when the type of the first handover condition is the same as the type of the second handover condition, thresholds corresponding to the first handover condition and the second handover condition are different; or
the first handover condition starts to be evaluated after the first message is received, and the second handover condition starts to be evaluated after the second message is received.

25. A communication apparatus, comprising a module configured to perform the method according to any one of claims 1 to 13 or a module configured to perform the method according to any one of claims 14 to 24.

26. A communication apparatus, comprising a processor, wherein the processor is coupled to a memory, the memory stores a computer program, and the processor is configured to invoke the computer program in the memory, to enable the communication apparatus to perform the method according to any one of claims 1 to 13 or the method according to any one of claims 14 to 24.

27. A communication system, wherein the communication system comprises a network side apparatus and a terminal side apparatus, the terminal side apparatus is configured to perform the method according to any one of claims 1 to 13, and the network side apparatus is configured to perform the method according to any one of claims 14 to 24.

28. A computer-readable storage medium, wherein the storage medium stores a computer program or instructions, and when the computer program or the instructions are executed by a computer, the method according to any one of claims 1 to 13 or the method according to any one of claims 14 to 24 is implemented.

29. A computer program product, wherein when a computer reads and executes the computer program product, the computer is enabled to perform the method according to any one of claims 1 to 13 or the method according to any one of claims 14 to 24.
